Europäisches Patentamt

European Patent Office

Office européen des brevets

(11) Publication number: **0 300 167**
**A2**

# (12) EUROPEAN PATENT APPLICATION

(21) Application number: **88108563.3**

(51) Int. Cl.⁴: **G06K 9/62**

(22) Date of filing: **28.05.88**

(30) Priority: **28.05.87 US 55145**
**13.05.88 US 194045**

(43) Date of publication of application:
**25.01.89 Bulletin  89/04**

(84) Designated Contracting States:
**AT BE DE ES FR GB IT LU NL**

(71) Applicant: **THUMBSCAN INC.**
**Two Mid-America Plaza Suite 800**
**Oakbrook Terrace Illinois 60181(US)**

(72) Inventor: **Taylor, Kenneth E.**
**1505 Devonshire Court**
**Champaign, Illinois 61821(US)**
Inventor: **Glickman, Jeff B.**
**2106 Melrose Drive**
**Champaign, Illinois 61820(US)**
Inventor: **McKinney, Philip C.**
**18836 Kings Road**
**Homewood, Illinois 60430(US)**

(74) Representative: **Hoeger, Stellrecht & Partner**
**Uhlandstrasse 14c**
**D-7000 Stuttgart 1(DE)**

(54) **Apparatus and method for matching image characteristics such as fingerprint minutiae.**

(57) A system for matching images in which characteristic points of an image to be tested for a match, such as a fingerprint, are compared with characteristic points of a master image by attempting to match the distances between pairs of master characteristic points with distances between pairs of live characteristic points. In one embodiment of the system, the angles of orientation between pairs of characteristic points are used in the comparison in addition to the distance between pairs of characteristic points. The matching system can be implemented in an identification mode in which the live image is attempted to be matched with each of a number of master images, or a verification mode in which the live image is attempted to be matched with a master image that is purported to be the same as the live image.

FIGURE 4

# APPARATUS AND METHOD FOR MATCHING IMAGE CHARACTERISTICS SUCH AS FINGERPRINT MINU-TIAE

This application is related to the prior application Serial No. 055,145 of the same title, filed on May 28, 1987 and owned by a common assignee. The invention of this application is an improvement upon the invention of the prior application, and portions of the text and the drawings of the prior application are included herein as a basis for describing the present improvement invention.

This invention relates generally to the field of image matching, and in particular, matching a "live" or test image to a previously stored representation of a master image on the basis of identifying characteristics found in the live image and the master image. In this context, the image to be matched can be a two-, three-, or n-dimensioned object, pattern or picture. Identifying characteristics are characteristics that are generally unique to the image and unvarying and which can be expressed as point locations in a suitable coordinate system. Generally, matching can be applied as a verification technique where the live image is compared with a known image to determine whether the tested image is the same as the known image, or matching can be applied as an identification technique where the live image is compared with each one of a collection of known images to determine whether the live image is within the collection of images and, if so, which of the known images corresponds to the tested image.

## BACKGROUND OF THE INVENTION

Although the present invention can be applied generally in the field of image matching, the invention has particular utility in the area of personal identification. Matching in the context of the identification or verification of a person's identity is a burgeoning industry. While most often associated with security in sensitive government and commercial installations, matching for personal identification has potential application wherever a person's identity needs to be identified or verified, e.g., in the control of access to physical locations such as nuclear power stations, airports and other transportation facilities, industrial locations and in the home; in the control of access to computing and data management equipment; and in banking or commercial transactions. In recent years, special emphasis has been placed on developing what has come to be known as biometric identification.

Biometrics is the study of biological phenomena, and in the area of personal identification some chosen characteristic of a person is used to identify or verify that person's identity. Biometric identification has gained interest in recent years because certain personal characteristics have been found to be substantially unique to each person and difficult to reproduce by an imposter. Further, the recording and analysis of biometric data is generally susceptible to automation owing to the increased use of computer controlled electronics and digital recording techniques.

The biometric identifying characteristic may be biologically determined as with a fingerprint, or it may be some characteristic that is learned or acquired, such as handwriting or voice patterns. Ideally, the characteristic should be unique for every person and unvarying over the time frame during which the person may be tested for identification. The characteristic should also be difficult to duplicate by an imposter in order to secure against erroneous identification.

Some of the biometric characteristics most investigated today for use in a personal identification system include fingerprints, hand or palm prints, retina scans, signatures and voice patterns. Hand or palm print techniques typically evaluate the shape of a person's hand or other significant features such as creases in the palm, but these techniques may be fooled by templates or models of the hand of an authorized person. Retina scanning techniques evaluate the pattern of blood vessels in a person's retina. A drawback of this technique is that the blood vessel pattern may vary over time, e.g., when alcohol is in the blood stream or during irregular use of glasses or contact lenses. Also, a user may feel uneasy about having his or her eye illuminated for retina scanning or the possibility of eye contamination if there is contact between the eye and the scanning apparatus. Signatures can be forged easily and must usually be evaluated by a human operator, although work has been done on automated systems that evaluate the dynamics of a person's handwriting, such as the speed and the force of hand movement, pauses in writing, etc. Using voice patterns as the identifying characteristic encounters difficulties owing to the wide variations in a person's voice over time, the presence of background noise during an evaluation and the potential for an imposter to fool the system with a recording of the voice of an authorized person.

The most commonly used biometric characteristic and the one that has been the most investigated and developed is, of course, the fingerprint. Up until now, the technology of personal identification through fingerprint analysis has been used mainly in law enforcement, and this long term experience with fingerprint analysis has developed a large amount of information about fingerprints and has confirmed the uniqueness of a person's fingerprints. Historically, in law enforcement, fingerprints have been recorded by inking the fingerprint and making a print on a card for storage. Particularly for applications outside law enforcement, less burdensome and intrusive recording methods needed to be developed.

Over the past several years, there have been developed various electro-mechanical systems for recording and matching a live fingerprint with a stored representation of the fingerprint of the authorized person. In one type of system, an image of the live fingerprint pattern is read and optically compared with a master fingerprint pattern that may be stored on film. Difficulties arise in this system in aligning the live and the master fingerprint patterns, leading to the use of complicated devices to secure the user's finger in exact alignment with the recording device or to rotate and translate the live pattern with respect to the stored pattern to find registration. Further, because this type of system relies on a precise one-to-one sizing of the live and stored fingerprint patterns, errors in matching can occur where the live fingerprint pattern is deformed even slightly, e.g. when the finger is swollen or is pressed hard against the reading surface.

In another type of fingerprint matching system, the live fingerprint is read and the image is compared with a hologram of the fingerprint of the authorized person. This system requires the storage of a library of holograms at the testing location for each authorized person in the system and the use of a specialized light source and a complicated optics system.

The trend in automatic fingerprint matching is toward the increased use of electronics and computer control of the matching process, while minimizing the reliance on moving mechanical parts and complicated optics systems. In such a system the live fingerprint typically is scanned and digitally recorded as a binary, i.e., two-tone, image of the fingerprint pattern. Characteristic features of the fingerprint pattern, such as ridge endings, points of ridge bifurcation, and the core of a whorl -- collectively called the minutiae of the fingerprint pattern -- are found in the binary fingerprint image and then compared with master minutiae that have been derived previously from a fingerprint of the authorized person in order to determine whether there is a match.

The minutiae of both the live and the master fingerprints are defined as the X and Y coordinates of the minutiae relative to the coordinate system of the image from which they were derived. Additional data describing the fingerprint pattern can be used to reduce the chance of making a false match. These can include the "angle" of a minutia, most commonly defined as the direction of a ridge or ridge pattern immediately adjacent to a minutia, the number of other minutiae appearing in a predetermined region surrounding a minutia point, the number of ridge lines appearing between two minutiae, or some other topological feature of the fingerprint.

The present invention presents a novel apparatus and method for matching characteristic points of a live or test image to characteristic points of a stored or master image and has particular application in fingerprint matching systems to improve upon the above described conventional systems.

## SUMMARY OF THE INVENTION

The invention is an improved system for matching images and will be described in terms of a specific embodiment for matching fingerprints for the purpose of personal identification. Given a list of minutiae points for a live fingerprint to be tested, which minutiae have been extracted from the fingerprint pattern by any one of the known methods, the present invention provides an improved way to match the minutiae points with minutiae points that have been previously stored or derived from a master fingerprint for the authorized person. The minutiae of each of the live and master fingerprints are defined as X,Y coordinate points in a Cartesian coordinate system. Such a set of minutiae points is called a feature vector because it represents a listing of the characteristic features of the fingerprint pattern.

In accordance with the technique of the present invention, a distance and angle spectrum is calculated for each of the minutiae points found in the live fingerprint pattern. The spectrum for a particular minutia point is a listing of the distances and angular orientations between that index minutia point and each one of the other minutiae points found in the live fingerprint pattern. The angle of orientation between a subject or index minutia point and another minutia point is the angle measured from a predetermined reference line including the index minutia point, such as horizontal, to a straight line segment which would connect the two points. Distance and angle spectra are also calculated for the master minutiae points previously extracted from a master fingerprint. To compare the live distance and angle spectra with the master distance and

3

angle spectra, each spectrum in the master data is attempted to be matched with a spectrum in the live data. Owing to possible deformations in the live fingerprint pattern the comparison is done in accordance with a predetermined tolerance. On the occurrence of a suitable match between the live distance data and the master distance data, a person's identity is verified and the appropriate action can then be taken.

## BRIEF DESCRIPTION OF THE DRAWINGS

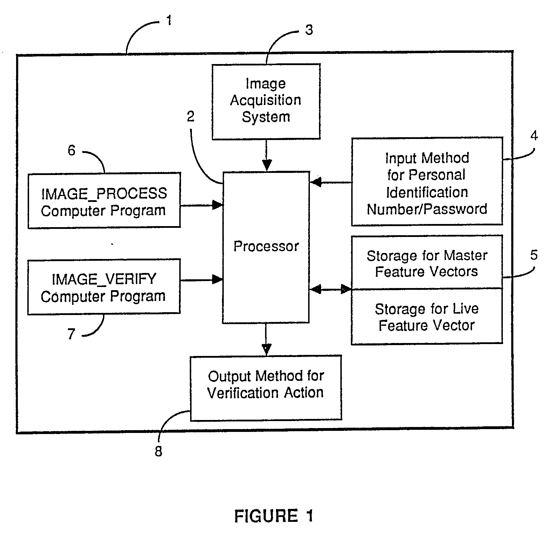

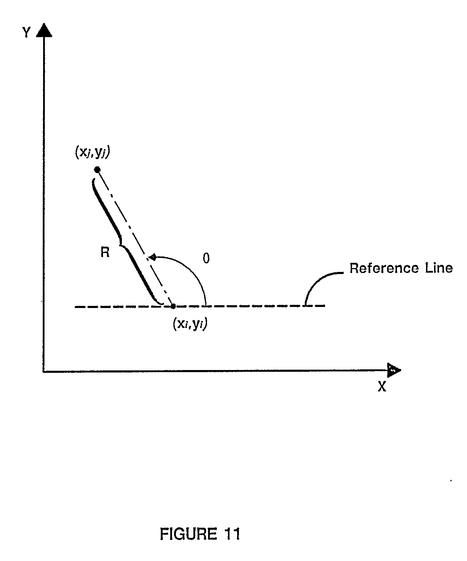

The above and other features and advantages of the invention as well as a fuller description of the invention itself will become more apparent to those skilled in the art in view of the following detailed description taken together with the accompanying drawings in which like referenced numerals and labels indicate corresponding parts or elements throughout the several views. Figures 1 through 10 depict embodiments of a matching system incorporating the basic invention described in the aforementioned prior application, which embodiments are also applicable to the present invention as described below, and Figures 11 through 16 depict the improvement of the present invention.

Fig. 1 is a functional block diagram of a stand-alone matching system that may incorporate the present invention.

Fig. 2 is a functional block diagram of a second embodiment including one or more remote terminals for the entry of live images that may be used in a matching system incorporating the present invention.

Fig. 3 is a diagram of an optics assembly that may be used to obtain a binary image for use with the present invention.

Fig. 4 is a functional flow chart showing the steps in extracting from a live image a feature vector listing characteristic points of the live image for use in the invention.

Figs. 5A and 5B are a functional flow chart showing the steps of a matching technique in accordance with the invention of the aforementioned prior application.

Figs. 6A-6C are a functional flow chart showing the steps in extracting the characteristic points of an image.

Fig. 7 is a functional flow chart showing the steps in deriving distance spectra, i.e., sets of distances from each characteristic point to all other characteristic points of an image, in accordance with the invention of the aforementioned prior application.

Fig. 8 is a functional flow chart showing the steps in comparing distance spectra derived from an image to be tested and distance spectra representative of a master image in accordance with the invention of the aforementioned prior application.

Figs. 9 and 9B are a more detailed functional flow chart showing the steps of a process of matching distance spectra in accordance with the invention of the aforementioned prior application.

Figs. 10A and 10B show a functional flow chart of the steps in evaluating the results of the matching process in accordance with the invention of the aforementioned prior application.

Fig. 11 is a diagram of sample minutia points showing the calculation of the angle of orientation $\theta$ of two minutia points.

Fig. 12 is a functional flow chart comparable to the flow chart of Figs. 5A and 5B and showing the steps of a matching technique in accordance with the present improvement invention.

Fig. 13 is a functional flow chart comparable to the flow chart of Fig. 7 and showing the steps in deriving distance and angle spectra in accordance with the present improvement invention.

Fig. 14 is a functional flow chart comparable to the flow chart of Fig. 8 and showing the steps in comparing distance and angle spectra derived from an image to be tested and distance and angle spectra representative of a master image in accordance with the present improvement invention.

Figs. 15A-15B are a more detailed functional flow chart, comparable to the flow chart of Figs. 9A and 9B, showing the steps of a process of matching distance and angle spectra in accordance with the present improvement invention.

Figs. 16A-16C are a functional flow chart comparable to the flow chart of Figs. 10A and 10B and showing the steps in evaluating the results of the matching process in accordance with the present improvement invention.

## DETAILED DESCRIPTION

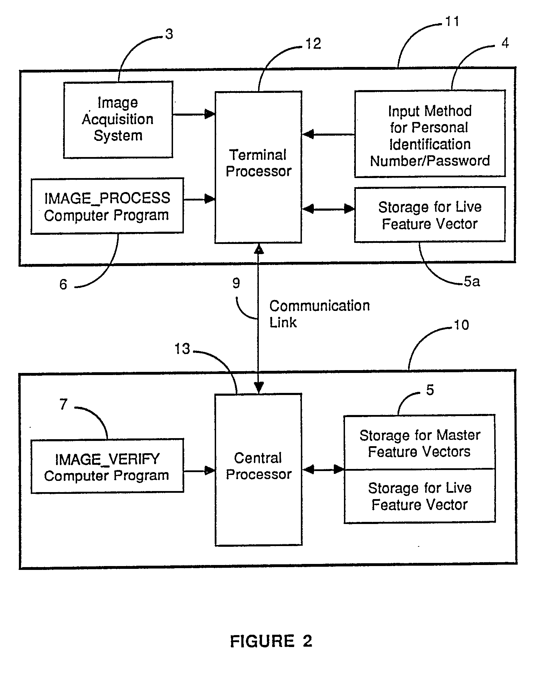

Turning now to the drawings, Fig. 1 and Fig. 2 show two basic types of system for matching images. Fig. 1 represents a stand-alone system 1 in which the live image to be tested is acquired at the same location that the matching is to be done, whereas Fig. 2 represents a system having a central station 10 connected by a suitable communication link 9 with one or more remote terminals 11.

The stand-alone system 1 contains an image acquisition system 3, an input method 4 for receiving a personal identification code, and an output method 8 for initiating a desired action based on the outcome of the attempt to match. The matching system 1 also contains a processor 2, a storage 5 for the live characteristic data and a library of sets of master characteristic data, as well as the IMAGE_PROCESS program 6 and the IMAGE_VERIFY program 7 that operate in conjunction with the processor 2 to extract characteristic points of an image and compare the live data to the master data.

The invention will be described in more detail in accordance with the embodiment shown in Fig. 2 and for the particular application of matching fingerprints, although it is understood that the invention is equally applicable to the system configuration shown in Fig. 1 and can be used to match images besides fingerprints. Further, the invention can be used in matching systems to search for the identity of a person whose fingerprint image is being tested, as in law enforcement applications, or, as described hereinafter, the invention can be used in a verification system in which the person seeking verification of identity essentially alleges his or her identity and an attempt is made to match the fingerprint of that person with a master fingerprint of that person whose identity is alleged.

The embodiment shown in Fig. 2 basically comprises one or more remote terminals 11 each of which is connected by a suitable communication link 9 to the central station 10. The terminals 11 are identical, and the invention will be described hereafter in terms of a single terminal 11. The terminal 11 acquires the live image to be tested, processes the image to obtain its characteristic points and transmits the characteristic points of the live image to the central station 10 to be evaluated for a match. The terminal 11 includes the image acquisition system 3, the input method 4, a local storage 5a for storing characteristic points of the live image, a terminal processor 12, and the IMAGE_PROCESS program 6. The terminals may be stationed at any location where physical access is to be controlled or personal identification is required, e.g., computer terminals, building entry points, automatic banking tellers. The central station 10 includes the equipment and programming that is necessary to evaluate the live data received from a remote terminal, which are a central processor 13, the storage 5 and the IMAGE_VERIFY program 7.

In general, to verify his or her identity, a person activates the matching system by entering a personal identification code or number (PIN) that is uniquely assigned to the person. This is done through the input method 4, which may be a keyboard, keypad, card reader or other conventional method. The person then places a selected finger on a fingerprint reader at the terminal. Each remote terminal 11 includes an image acquisition system 3 for "reading" the fingerprint, forming a binary image thereof and storing the image in a suitable random access memory (not shown).

After the binary image of the live fingerprint pattern is obtained and stored, the IMAGE-PROCESS program 6 in the remote terminal 11 processes the image to simplify the digitized fingerprint pattern and also to identify the characteristic points or minutiae of the fingerprint. The fingerprint pattern that is stored as a binary image is formed of ridges that may be more than one pixel in width. The simplification procedure essentially reduces the fingerprint pattern to a skeleton of ridges all of only one pixel width. Given the "thinned" skeleton image of a fingerprint, the X,Y coordinates of characteristic minutiae are identified. The resulting list of minutiae points constitutes the "feature vector" that is transmitted to the central station 10 for evaluation. At the central station 10 the feature vector is processed to obtain a unique set of data for the fingerprint. In accordance with the invention of the aforementioned prior application, for each minutia in the feature vector received from the remote terminal 11 the distances to all other minutiae in the feature vector are calculated by the IMAGE_VERIFY program 7. In this form the data is independent of any particular orientation of the live fingerprint -- only the relative distances between the minutiae matter.

The present improvement invention provides that for each minutia in the feature vector received from the remote terminal 11 the angles of orientation to all other minutiae in the feature vector are calculated in addition to the distances. Because of the additional identifying information provided by the angles of orientation, the risk of making a false positive verification is believed to be reduced, and certain of the computations in the verification process can be made more efficient. Alternatively, a matching technique using only the angles of orientation in place of the distance information is within the scope of the present invention.

A library of fingerprint data for the persons expected to be using the system is stored on any suitable nonvolatile storage medium at the storage 5 and is available to the central processor 13. The fingerprint data for each person may be represented in a master feature vector that was obtained at an initial enrollment of the person. For enrollment, the person essentially has his or her selected finger read and processed (as described above) a number of times until consistent data for a master feature vector are obtained.

The PIN of the person requesting verification of identity is used by the central processor 13 to locate and retrieve the master feature vector for the person whose identification number was entered. Alternatively, the master data at the central station 10 can be stored as sets of previously computed distances between minutiae as described above. This requires more storage space although less computation is required each time a verification is requested. If a feature vector of master minutiae is stored, the central processor 13 must compute master sets of distances based on the minutiae listed in the master feature vector.

After obtaining the master data, the central processor 13 operates under the control of the IMAGE_VERIFY program 7 to attempt to match the live data with the master data. On the occurrence of a suitable match between the live data and the master data the person's identity is deemed to be verified, and a signal is sent from the central station 10 back to the remote terminal 11 that requested the verification to indicate the match. Acting on this signal, the remote terminal 11 can then permit access to a guarded site, signify that a verification has been made for the benefit of a human operator (e.g., bank teller or airport security guard), enable the operation of computer equipment, etc.

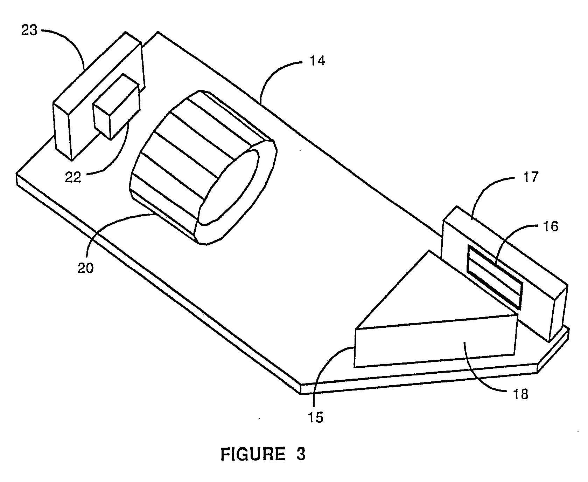

The various elements of the matching system shown in Fig. 2 will now be explained in more detail. The image acquisition system 3 contains an optics assembly for sensing and recording the live fingerprint image. An example of a suitable optics assembly is shown in Fig. 3. The components of the optics assembly are mounted on the base plate 14. An array 16 of LEDs, housed in the frame 17, illuminates the diagonal face 18 of the right angle prism 15 from behind. In operation, a user places his or her finger on the diagonal face 18 of the prism 15 which serves as a reading surface. Light from the LED array 16 is shone on the back of the diagonal face of the prism 15. Where a valley occurs in the fingerprint the skin is not touching the prism; the light from the LED array 16 impinging on the reading surface 18 of the prism at these locations is reflected internally in the prism, through the lens 20 and onto a total imaging device 22 which is mounted on the frame 23. Where a ridge occurs in the fingerprint the skin touches the prism and the light from the LED array 16 is not reflected onto the imaging device 22. Thus a high contrast image of the fingerprint is focussed by the lens 20 onto the imaging device. The fingerprint image is then stored in a suitable digital memory as a binary image, a two-tone picture of the ridge and valley pattern of the live fingerprint.

The imaging device 22 may be any total image sensor that is capable of sensing an image and translating it into a binary image. One such device is the IS32 OpticRam produced by Micron Technology, Inc., of Boise, Idaho. Essentially this device comprises a matrix of light sensitive binary elements or pixels, each containing a capacitor that will discharge when light strikes the element. In operation the sensing elements are turned on by charging the capacitors to an initial value. The refresh signal is disabled and then an image is focussed on the array. Elements in the array that are exposed to light will turn off, i.e., the capacitors will discharge, resulting in a two-tone image corresponding to the image focussed on the device. In the case of the IS32 imaging device, the sensor itself can be used as a memory so that a separate memory to store the binary image is not necessary.

Alternatively, any conventional imaging system may be used to sense and record the fingerprint image. For example, this may be a system in which the fingerprint image is produced by the internal reflection technique previously described and scanned in raster fashion, using a single photodetector or a linear array of photodetectors to translate the pattern of light falling on it into electrical signals. Typically, a pivoting mirror is used to move the fingerprint image over the stationary photodetector device. However, by using a total imaging device such as the IS32 sensor, the moving mechanical and/or optical portions of the described conventional systems are eliminated, as well as the programming necessary to synchronize the moving parts with the electronic recording apparatus. As an alternative total imaging device, a two dimensional array of charge coupled devices (CCDs) may be used, and the analog output signal thereof may be processed in any known manner to obtain a digital representation of the sensed image.

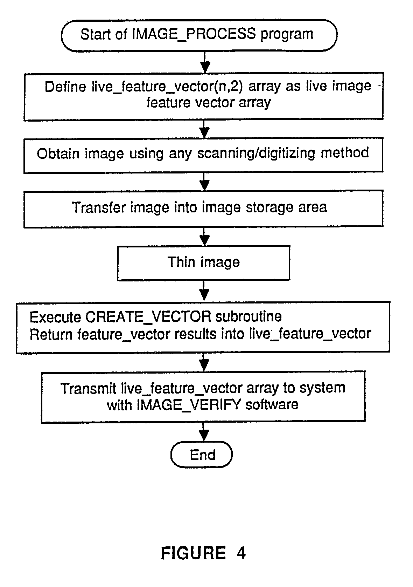

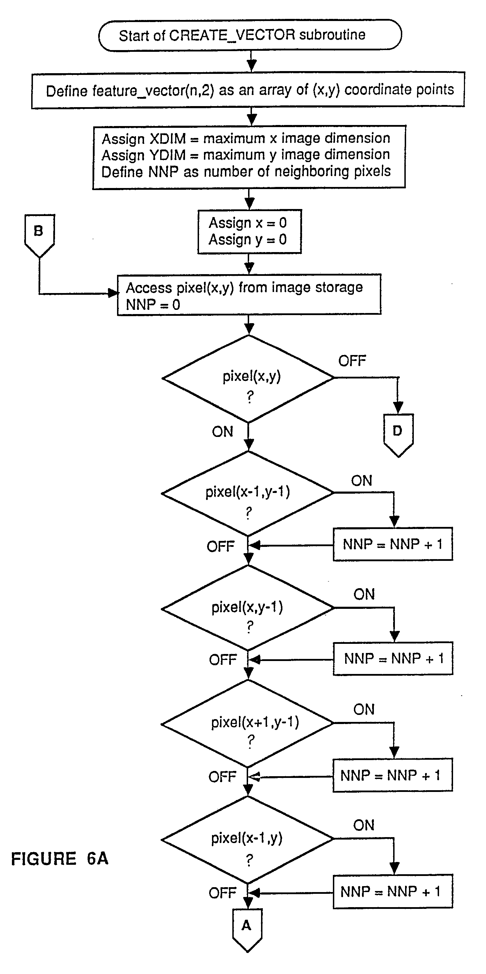

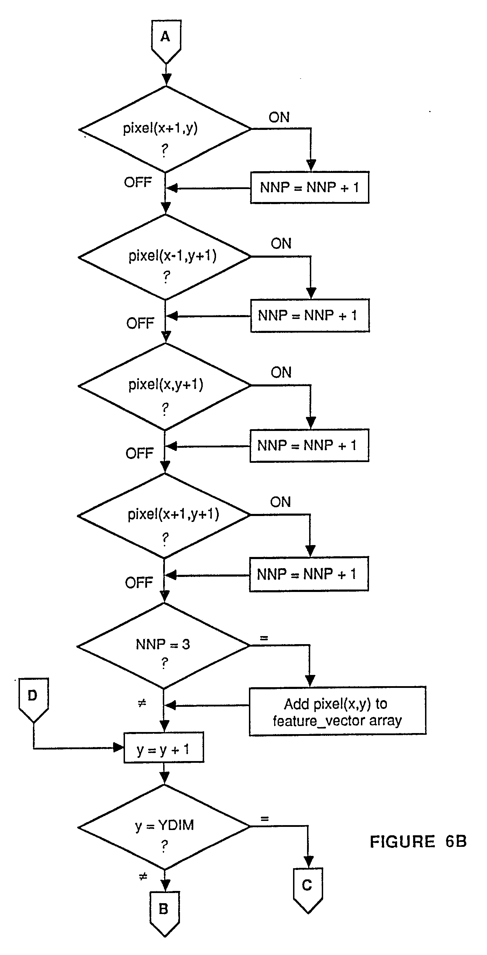

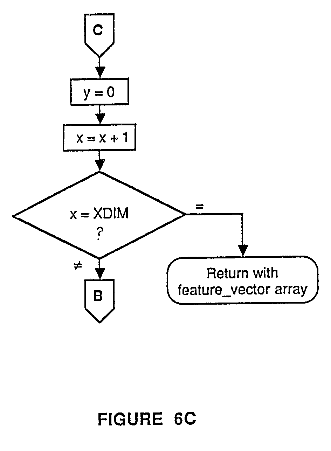

Figures 4-10 are functional flowcharts showing a preferred embodiment of a technique for matching an image in accordance with the invention of the aforementioned prior application. Figs. 4 and 6, plus Figs. 11-16, illustrate a preferred embodiment of a matching technique in accordance with the present improvement invention. These techniques can advantageously be implemented as software programming on the terminal processor 12 and the central processor 13 of the matching system, or the techniques may be implemented as hard wired processors or as a combination of the two approaches. For the purpose of this description, the techniques will be explained in terms of software programming.

The matching technique of the aforementioned prior application will be be described first. The two major programs are IMAGE__PROCESS, which derives a feature vector or list of characteristic minutiae from the live fingerprint being tested, and IMAGE__VERIFY, which effectively compares these live minutiae to previously computed master minutiae, in order to test for a match. In the stand-alone system shown in Fig. 1, the IMAGE__PROCESS program 6 and the IMAGE__VERIFY program 7 operate in conjunction with the processor 2. In the system configuration shown in Fig. 2, the IMAGE__PROCESS program 6 is resident in the remote terminal 11 and operates in conjunction with the terminal processor 12, while the IMAGE__VERIFY program 7 is resident in the central station 10 and operates in conjunction with the central processor 13.

Fig. 4 shows the IMAGE__PROCESS program. Live-feature-vector is defined as an n x 2 array. This array will eventually contain the X and Y coordinates of each of the minutiae found in the live fingerprint. Although a Cartesian coordinate system is used in the described embodiment, any other coordinate system can equally well be used under the technique of the invention. n is chosen in consideration of the maximum number of minutiae that can normally be found in the area of interest in the fingerprint. It has been found that for an area of about one square centimeter around the core of a fingerprint, there are about ten bifurcation minutiae. Under those parameters, it would be satisfactory to set n equal to twenty for the maximum number of expected minutiae.

Under the direction of the IMAGE__PROCESS program, a binary image of the live fingerprint pattern is obtained and stored by the image acquisition system 3 as described above. In order to facilitate the recognition of minutiae in the fingerprint image, the stored fingerprint image is then thinned so that each ridge line is one pixel wide. The thinning procedure can be done in any known way. See, for example, Algorithms For Graphics and Image Processing, Chapter 9, by Theo Pavlidis, Computer Science Press 1982. It is not strictly necessary that the fingerprint image be thinned in order to obtain the minutiae, but the minutiae detection procedure is simpler and can operate more quickly if the fingerprint image is first simplified by thinning.

Once the fingerprint image is simplified, the CREATE__VECTOR subroutine is called by IMAGE__PROCESS. This subroutine, described in more detail with reference to Fig. 6, derives the X and Y coordinates of the minutiae found in the live fingerprint image and returns the coordinates to IMAGE__PROCESS in the live-feature-vector array. The operation of the IMAGE__PROCESS program concludes by transmitting the minutiae coordinate information in the live-feature-vector array to the processor operating in conjunction with the IMAGE__VERIFY program. In the system configuration shown in Fig. 2, the minutiae coordinate information is transmitted over the communication link 9 to the central processor 13 of the central station 10. To prevent the unauthorized electronic recording of the minutiae information as it is transmitted over the communication link 9, the information may be encrypted before it is transmitted and decrypted when the information has been received by the central station 10.

The CREATE__VECTOR subroutine, shown functionally in Figs. 6A-6C, begins by defining feature-vector as an nx2 array. This is a temporary array that accumulates the X and Y coordinates of minutiae as the minutiae are identified in the thinned fingerprint image. xdim and Ydim are the maximum X and Y dimensions of the image being analyzed, and nnp is the running total of "on" pixels immediately surrounding a particular image pixel being evaluated.

This subroutine evaluates the region immediately adjacent each on pixel in the fingerprint image to determine whether the pixel represents a minutia point. Specifically, each pixel surrounding the pixel being evaluated is checked to see whether it is on or off. If only one of the adjacent pixels is on, the pixel being evaluated is the end of a ridge line. If three adjacent pixels are on, the pixel being evaluated is a bifurcation point. Although both of these types of minutiae, or other types of minutiae, can be searched the present embodiment functions to identify only bifurcation minutiae, which have been found to be sufficient for matching a fingerprint.

As shown in Fig. 6, a single pixel is obtained from the binary image for evaluation. If the pixel is on, then its neighboring pixels are checked; otherwise, the next pixel in the binary image is retrieved for evaluation. When successively checking the state of neighboring pixels, if a neighboring pixel is on, nnp is incremented by one. After evaluating all eight surrounding pixels, if nnp equals three the pixel being evaluated is a bifurcation minutia and the X and Y coordinates of the pixel are stored in the feature-vector array.

The subroutine continues scanning through the fingerprint image, evaluating each pixel to see whether it is a bifurcation minutia, and stops when all pixels of the image have been evaluated. At the completion of this evaluation, the feature-vector array contains the X and Y coordinates of each bifurcation minutia in the fingerprint image. This feature-vector array is returned to the main program IMAGE__PROCESS (Fig. 4) as the live-feature-vector and is subsequently transmitted to the central processor 13 for use by the IMAGE_VERIFY program.

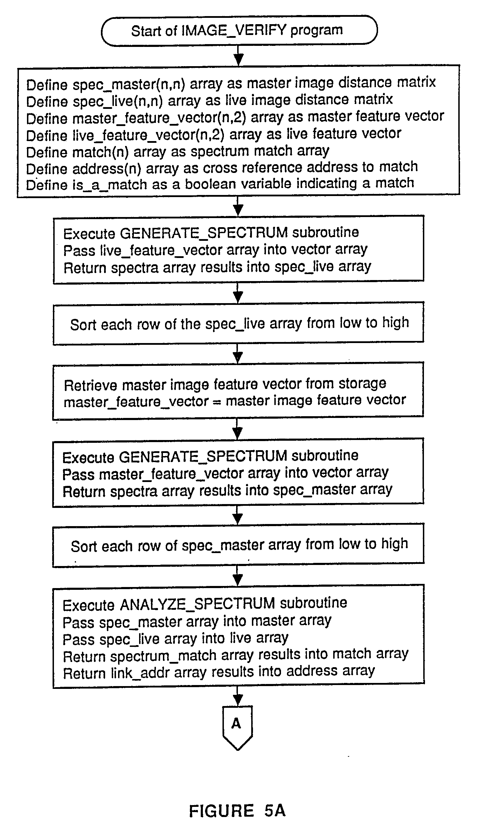

The IMAGE_VERIFY program, resident in the central station 10. is described in Figs. 5A-B. Generally, this program performs the analysis to determine whether the live fingerprint being tested matches the fingerprint of the person whose identity is claimed. Initially several arrays and variables are defined:

spec-master is an nxn array which will hold sets of distances between each minutia in the master fingerprint and the other minutiae in the master fingerprint;

spec-live is an nxn array which will hold sets of distances between each minutia found in the live fingerprint image and the other minutiae in the live fingerprint image;

master-feature-vector is an nx2 array which will hold the X and Y coordinates of the minutiae previously derived from the master fingerprint;

live-feature-vector is an nx2 array as previously defined, i.e., it holds the X and Y coordinates of the minutiae found in the live fingerprint image;

match is a linear array having n elements (where here n equals the number of locations in spec-master and spec-live) which will hold the differences between the distance values in spec-master and spec-live;

address is a linear array of the same length as match and is an index to match, i.e., it will identify which one of the live minutiae is associated with the location in match corresponding to each location in address: and

is-a-match is a Boolean variable which will be "true" if a match is found or "false" if a match is not found.

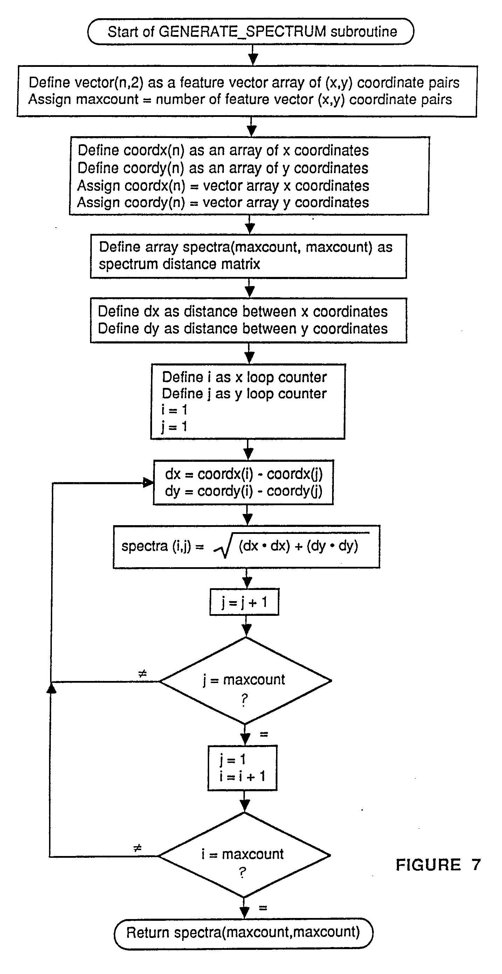

As first step in IMAGE_VERIFY, the subroutine GENERATE_SPECTRUM is called upon to create a two-dimensional matrix of distances between each possible pair of minutiae points identified in live-feature-vector . In general, GENERATE_SPECTRUM produces a set or spectrum of distances for each minutia represented in the feature vector passed to it for processing, where the set of distances for each minutia consists of the distances between that minutia and each other minutia in the feature vector. The GENERATE_SPECTRUM subroutine is described in Fig. 7 by way of a functional flowchart and will be explained in more detail later. In a variation of the presently described embodiment, distance spectra can be calculated for fewer than all of the minutiae points and the matching technique of the present invention can still be utilized, but the possibility of erroneously acknowledging a match will increase.

The first time GENERATE_SPECTRUM is called by the IMAGE_VERIFY program, the minutiae found in the live fingerprint image -- identified by their X,Y coordinates in the live-feature-vector array -- are processed to produce the distance spectra for the minutiae of the live fingerprint being tested. These distance spectra are returned to the IMAGE_VERIFY program as the spec-live array. Each distance spectrum in spec-live, where each row of spec-live represents a distance spectrum corresponding to a different minutia, is then sorted by any conventional sorting technique to order the distance values in the spectrum by increasing magnitude.

After spec-live has been generated and sorted, IMAGE_VERIFY performs the same processing on the stored master data as was just done for the live data. First, the appropriate master feature vector is retrieved from the storage area 5. As already mentioned. the storage area 5 contains a master feature vector for each person expected to be using the matching system. The matching process will attempt to match the live feature vector with the master feature vector associated with the PIN entered through the input method 4 by the person being tested. After the information in the master feature vector is retrieved and read into master-feature-vector, the GENERATE_SPECTRUM subroutine is called again and this time processes the master feature vector data to produce distance spectra representative of the master fingerprint. These distance spectra are stored in the spec-master array. As with the live distance spectra, each distance spectrum in spec-master has its distance values sorted in order of increasing magnitude.

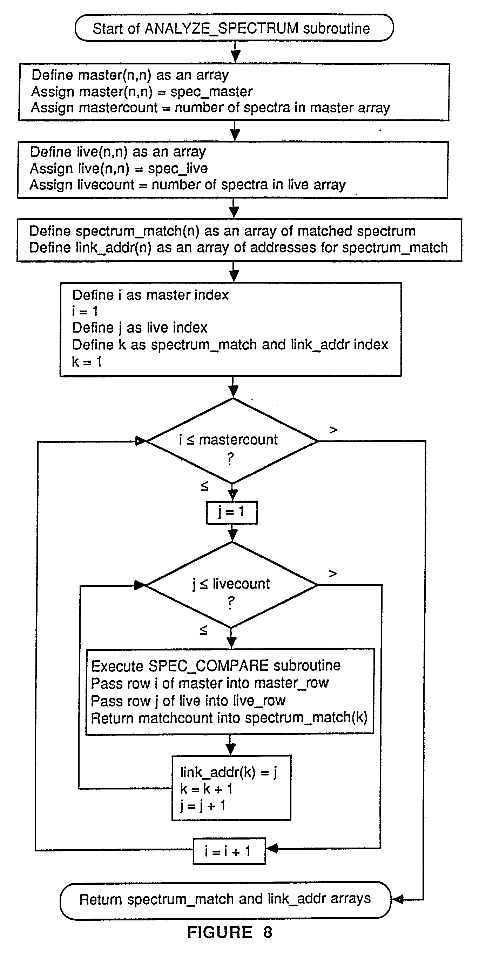

At this point, the live distance spectra and the master distance spectra are in the same format and the ANALYZE_SPECTRUM subroutine is called. The operation of this subroutine is illustrated by a functional flow chart in Fig. 8 and will be described in greater detail below. For the purpose of understanding the operation of the IMAGE_VERIFY program, ANALYZE_SPECTRUM can be thought of as comparing the distance spectrum associated with each minutia recorded for the master fingerprint with each of the distance spectra associated with the minutiae found in the live fingerprint to look for a live distance spectrum matching the master distance spectrum within a predetermined tolerance.

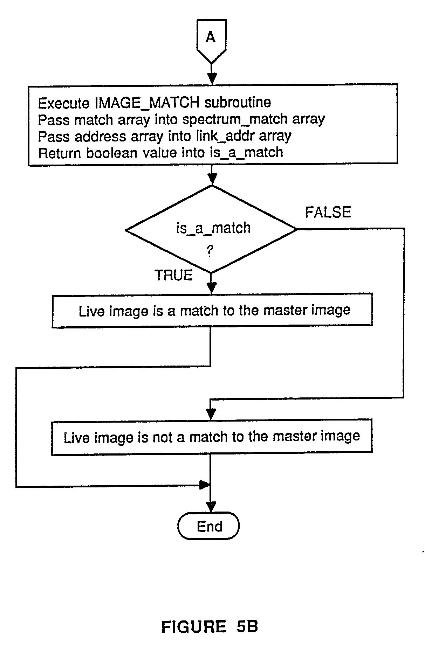

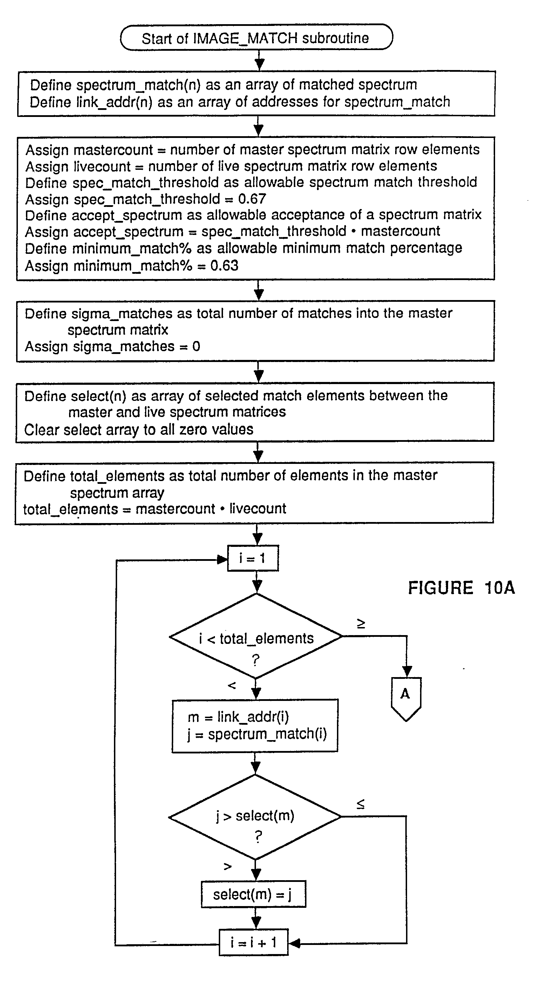

For this analysis, spec-master is passed to ANALYZE_SPECTRUM as master and spec-live is passed as live. Spectrum-match and link-addr are linear arrays which indicate the degree of match between all of the master distance values and the live distance values and are returned to IMAGE_VERIFY in the form of the match and address arrays. From the IMAGE_VERIFY program (see Fig. 5B), the information of the correlation between the live and the master distance spectra is passed to the IMAGE_MATCH subroutine and evaluated in accordance with predetermined criteria to determine whether an overall match exists. The operation of the IMAGE_MATCH subroutine is illustrated in Figs. 10A-B and will be explained in more detail later.

If a match is found to exist by IMAGE_MATCH, is-a-match is "true" in the IMAGE_VERIFY program; otherwise, is-a-match is "false". On the occurrence of a match, a suitable signal is transmitted by the central station 10 to the remote terminal 11 over the communication link 9 indicating that the identity of the person being tested has been verified. This signal can then be used by the remote terminal to open a door, allow access to a personal computer, activate a display to inform a human operator such as a bank teller or salesperson that the person's identity has been verified, or initiate any other desired activity that is contingent on the positive verification of the person's identity. Conversely, if a match is not found, a suitable signal may be sent to the remote terminal 11 by the central station 10 so that the remote terminal may initiate an appropriate action, for example, request that the user try again, shut the terminal down, or sound an alarm.

The GENERATE_SPECTRUM subroutine will now be described in more detail. This subroutine, called by the IMAGE_VERIFY program, is illustrated by the functional flowchart shown in Fig. 7. GENERATE_SPECTRUM takes a list of X, Y coordinate pairs identifying a set of minutiae, i.e., a feature vector array, and generates a matrix of distances from each minutia to every other minutia, analogous to a road map mileage chart that tells you the distance from each city to every other city.

maxcount is defined as the number of minutiae found in the feature vector. coordx is a linear array of n elements which contains the X coordinates of the feature vector in order. Similarly, coordy is linear array of n elements which contains the Y coordinates of the feature vector in order. An array called spectra will contain the distance spectra for the minutiae and is therefore of the dimensions maxcount x maxcount.

The heart of GENERATE_SPECTRUM is a computational loop in which the distance between each possible pair of minutiae is calculated and stored in spectra. For a pair of minutiae identified as i and j, the distance between the two minutiae is calculated by the equation:

$$\underline{\textbf{spectra}} \ (\texttt{i, j}) \ = \ \sqrt{(\texttt{dx} \cdot \texttt{dx}) + (\texttt{dy} \cdot \texttt{dy})}$$

where dx is the difference between the X coordinate values of the minutiae, as found in coordx, and dy is the difference between the Y coordinate values of the minutiae as found in coordy. Each row of spectra corresponds to a different minutia of the feature vector and will eventually contain the distance values between that minutia and all other minutiae of the feature vector. The resulting distance spectra, where each row of spectra constitutes a distance spectrum for its associated minutia, are returned to IMAGE_VERIFY through the spectra array.

The ANALYZE_SPECTRUM subroutine will now be described in more detail. This subroutine is also called by the IMAGE_VERIFY program and is illustrated by the functional flowchart shown in Fig. 8. ANALYZE_SPECTRUM takes the distance spectra calculated by the GENERATE_SPECTRUM subroutine for both the live feature vector and the master feature vector, compares each live distance spectrum to each master distance spectrum, and notes the correlation between the distance values in each live distance spectrum and master distance spectrum.

The following arrays and variables are defined for use in the ANALYZE_SPECTRUM subroutine:

master is an nxn array that is assigned the master distance spectra stored in spec-master;

mastercount is the number of distance spectra in master, i.e., the number of minutiae in the master data;

live is an nxn array that is assigned the live master distance spectra stored in spec-live;

livecount is the number of distance spectra in live, i.e., the number of minutiae found in the live fingerprint;

spectrum-match corresponds to the match array previously described and is a linear array which will contain the differences between distance values in master and live;

link-addr corresponds to the address array previously described and is an index to spectrum-match, i.e., it will identify which one of the live minutiae is associated with the location in spectrum-match corresponding to each location in link-addr;

i is an index to the master array;

j is an index to the live array; and k is an index to spectrum-match and link-addr.

The heart of ANALYZE_SPECTRUM is a computational loop which successively cycles through each master distance spectrum in master (as i is incremented) and, for each master distance spectrum, cycles through each live distance spectrum in live (as j is incremented) comparing each live distance spectrum with the master distance spectrum currently being evaluated. After all live distance spectra are compared with all master distance spectra, the results of the comparison are returned to the IMAGE_VERIFY program through spectrum match and link-addr.

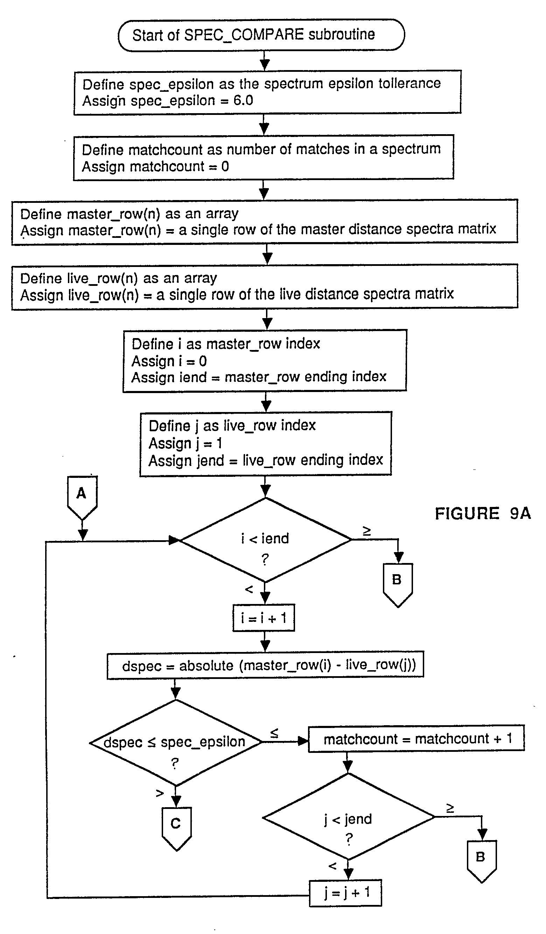

The actual comparison of distance spectra is accomplished by SPEC__COMPARE, a subroutine called from within the computational loop of ANALYZE__SPECTRUM. The operation of SPEC__COMPARE will now be described in relation to the flowchart shown in Figs. 9A-B. One master distance spectrum and one live distance spectrum are passed to SPEC__COMPARE by ANALYZE__SPECTRUM and stored in master-row and live-row, respectively. matchcount holds a running total of matches between distance values of the two spectra being compared.

i is the index to the distance values in master-row and has a maximum value of iend, the number of master minutiae. j is the index to the distance values in live-row and has a maximum value of jend, the number of minutiae that were found in the live fingerprint.

In operation, each distance value in the master distance spectrum is attempted to be matched with a distance value in the live distance spectrum. The distance values in the master distance spectrum are processed in order, i.e., by increasing magnitude, as are the distance values in the live distance spectrum. Two distance values are deemed a match if the absolute difference between the distance values, i.e., dspec, is less than or equal to the predetermined tolerance value spec-epsilon. The value of spec-epsilon is selected according to the desired stringency of the matching system. That is, a smaller value of spec-epsilon will require a closer correlation between the live and master minutiae in order to find a match, whereas a larger value of spec-epsilon will permit a match between live and master minutiae having less of a correlation. For minutiae identified on a 256 by 256 grid, corresponding to approximately one square centimeter of the live fingerprint pattern, a value of six for spec-epsilon has been found to be a suitable tolerance.

If the difference between the compared distance values satisfies the specified tolerance, matchcount is incremented by one and the next master distance value is attempted to be matched with one of the remaining live distance values. If the difference value dspec is greater than spec-epsilon for a particular live distance value, the next largest live distance value is attempted to be compared with the same master distance value. This evaluation continues until all distance values in the master distance spectrum have been attempted to be matched, or the distance values in the live distance spectrum have been exhausted, or it is not possible to match further live distance values with the remaining master distance values.

At the end of the operation of SPEC__COMPARE, the number of distance values in the master distance spectrum that have been matched to distance values in the live distance spectrum, i.e., matchcount, is returned to the computational loop of the ANALYZE__SPECTRUM subroutine and stored in spectrum match (See Fig. 8). SPEC__COMPARE will be called once by ANALYZE__SPECTRUM for each pair combination of a master distance spectrum and a live distance spectrum, for a total of mastercount x livecount times. Thus, spectrum match will have (mastercount x livecount) entries, where each entry contains the number of distance values that were found by SPEC__COMPARE to be matched between a unique pairing of a master distance spectrum and a live distance spectrum. link addr, the index to spectrum-match, will also have (mastercount x livecount) entries which list live distance spectrum row numbers, one through livecount repeatedmastercount times. It is these arrays, spectrum match and link-addr, that are finally returned by ANALYZE__SPECTRUM to the IMAGE__VERIFY program.

The final evaluation of the data representing the correlation between distance values of the master and live distance spectra is performed in the IMAGE__MATCH subroutine, which is called once near the end of the IMAGE__VERIFY program following the execution of the ANALYZE__SPECTRUM subroutine (see Fig. 5B). IMAGE__MATCH receives the spectrum-match and the link-addr arrays and returns the Boolean variable is-a-match which indicates whether an overall match exists. The IMAGE__MATCH subroutine will now be described in relation to Figs 10A-10B.

spectrum-match, link-addr, mastercount and livecount are defined the same as in the ANALYZE__SPECTRUM subroutine.

spec-match-threshold is a preselected number representing the minimum proportion of distance values in a master distance spectrum that must have found matches in a live distance spectrum in order to consider the master distance spectrum as being matched to the associated live distance spectrum. This value is arbitrarily set at 67%, although a larger or smaller number may be chosen in accordance with the desired stringency of the matching system.

accept-spectrum is the minimum number of distance values in a master distance spectrum that must have found matches with distance values from a live distance spectrum for the master distance spectrum to be deemed as matching that live distance spectrum.

minimum-match % is a preselected number representing the minimum proportion of the distance values of all master distance spectra that must be found in a matched master distance spectrum and matched with a distance value in the associated live distance spectrum in order for an overall match to be indicated by the system. This value is set at 63%, although this value also may be chosen in accordance with the desired stringency of the matching system.

sigma-matches is the running total of the number of matched distance values in the matched master distance spectra.

select is a linear array have n elements which will contain, for each live distance spectrum, the value of the greatest number of matches between the distance values in that live distance spectrum and distance values in the various master distance spectra.

total-elements is equal to the total number of possible pairings of master minutiae and live minutiae.

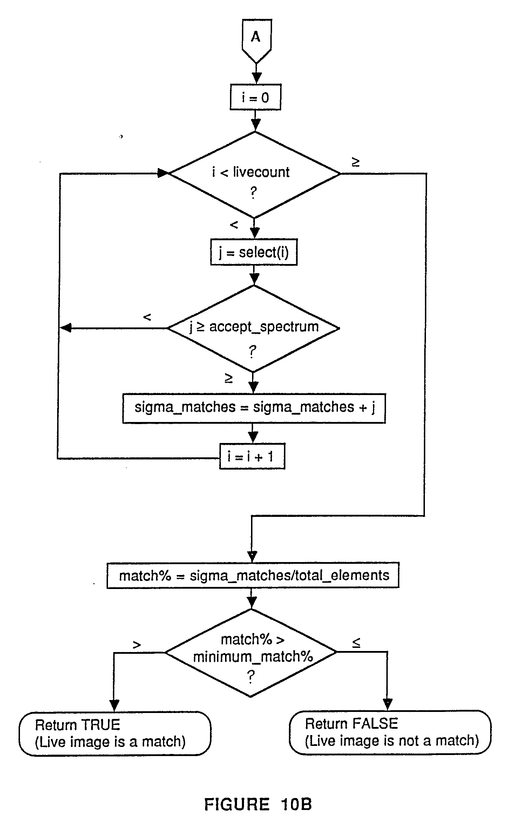

Turning to the portion of the IMAGE_MATCH flowchart shown in Fig. 10A, the loop at the bottom of Fig. 10A searches through spectrum-match to find for each live distance spectrum the master distance spectrum that matches it the best. This is done by finding the master distance spectrum with which the live distance spectrum has the most matched distance values. link-addr provides the index to spectrum-match to keep track of the live distance spectrum with which each location of spectrum-match is associated. When the closest matching master distance spectrum is found for a particular live distance spectrum, the number of matches between distance values of the two spectra is stored for that live distance spectrum in the select array. After all of the values in spectrum-match have been evaluated (i.e., i ≥ total-elements), the final match evaluation is performed, as illustrated in Fig. 10B.

The loop in the programming shown in Fig. 10B checks the number of the most distance matches for each live distance spectrum, and if that number is equal to or greater than accept-spectrum that number of distance matches is accumulated in sigma-matches. After the loop evaluates all live distance spectra, sigma-matches will equal the number of matched distance values in the master distance spectra that are deemed to be matched with live distance spectra. match % is then formed as the ratio of the number in sigma-matches to the number in total- elements. In the present embodiment, if the resulting proportion exceeds 63%, i.e., minimum-match %, then the live fingerprint image being tested is deemed matched. This is indicated in IMAGE_MATCH by returning a "true" value to the IMAGE_VERIFY program in is-a-match. If match % does not exceed minimum-match %, the IMAGE MATCH subroutine returns a "false" value to the IMAGE_VERIFY program in is-a-match.

Alternative standards for evaluating a match also may be utilized with the invention. For example, a final match of the live fingerprint to the master fingerprint could be defined to exist where the total number of matched master and live distance values exceeds a certain proportion of the maximum possible number, or where the proportion of matched master distance spectra exceeds a certain proportion of the total number of master distance spectra. In fact, the evaluation standard described in detail above is a hybrid of these two alternatives.

The present improvement invention will now be described in particular reference to Figs. 11-16. In general, the improvement invention utilizes the concept from the invention of the aforementioned prior application of using distance spectra to match a live image and a master image and adds to the matching process an evaluation of angles of orientation of minutiae in the live image and the master image. In this context, an angle of orientation for a given subject or index minutia and another minutia is defined as the angle formed between a predetermined reference line including the index minutia and a straight line segment connecting the two points. In the preferred embodiment of the improvement invention, the reference line for a given minutia $(X_i, Y_i)$ is taken to be horizontal, i.e., parallel to the X axis in a Cartesian coordinate system, and the angle of orientation $\theta$ with respect to another minutia $(X_j, Y_j)$ is measured in the counter clockwise direction as shown in Fig. 11. By the use of this additional identifying information for the minutiae of an image, it is believed that the occurrence of an erroneous match between a live image and a master image is reduced, and the matching process can be made more efficient in various respects.

Although the present invention will be described in more detail in terms of the system configuration shown in Fig. 2, i.e., a central station 10 connected by a suitable communication link 9 with one or more remote terminals 11, it is of course understood that the invention can take the form of the stand-alone system configuration shown in Fig. 1. In either configuration, the present improvement invention is constructed and operates in the same general manner as described above in connection with the invention of the aforementioned prior application, and differences arising owing to the implementation of the present improvement invention are explained hereinbelow.

As generally described above, the matching system is activated by a person entering his or her unique personal identification code or number at the remote terminal 11 through a suitable input method 4. The person then places a finger on a fingerprint reader at the terminal, so that the fingerprint can be read by the image acquisition system 3. The live fingerprint is read and stored as a digital image, e.g., by using as the imaging device 22 a total image sensor such as the IS32 OpticRam described above or a CCD array with suitable analog-to-digital processing circuitry. We have found that an improved fingerprint image can be obtained by providing the reading face 18 of the prism 15 (Fig. 3) with a thin coating that is tacky to the

11

touch. This coating can be made of any suitable material, preferably a polymer, and can be made to be replaceable if required.

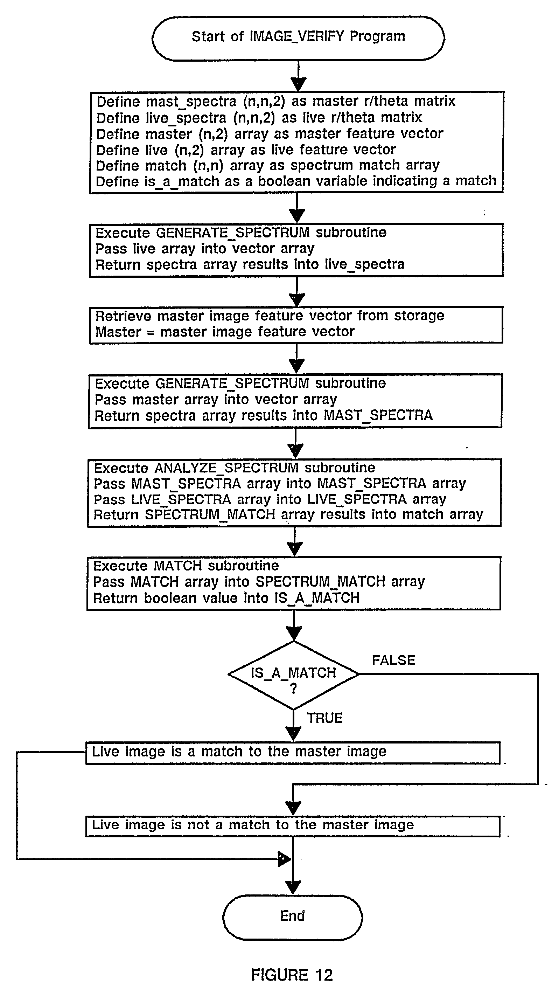

The IMAGE_PROCESS program 6 operates in conjunction with the terminal processor 12 in the remote terminal 11 to control the image acquisition system 3, derive a feature vector of characteristic minutiae from the live fingerprint being tested, and process the minutiae information. In the present improvement invention, the IMAGE_PROCESS program operates as described above in reference to Fig. 4, with the following exceptions. In an actual embodiment of the invention, the CREATE_VECTOR subroutine (Fig. 6) operates to identify ridge ending minutiae together with bifurcation minutiae. In reference to the bottom of Fig. 6B, this is accomplished by storing in the feature-vector array the X and Y coordinates of each pixel for which nnp equals one (representing a ridge ending) or three (representing a bifurcation). Additionally, the IMAGE_VERIFY program called by IMAGE_PROCESS is modified to process minutiae information including angles of orientation as well as distances between pairs of minutiae. The modified IMAGE_VERIFY program is shown by the functional flow chart in Fig. 12.

The IMAGE_VERIFY program shown in Fig. 12 corresponds to the IMAGE_VERIFY program shown in Fig. 5 and described above in connection with the invention of the aforementioned prior application. In the IMAGE_VERIFY program shown in Fig. 12, mast-spectra and live-spectra are arrays which will hold sets of associated distances (R) and angles of orientation ($\theta$) between pairs of minutiae in the master and live fingerprints, respectively. master and live correspond to master-feature-vector and live-feature-vector in Fig. 5 and are arrays which will hold the X and Y coordinates of the minutiae in the master and live fingerprints, respectively. match will store the correlation between the distance and angle values in mast-spectra and live-spectra, and is-a-match in a Boolean variable which will be "true" if a match is found or "false" if a match is not found.

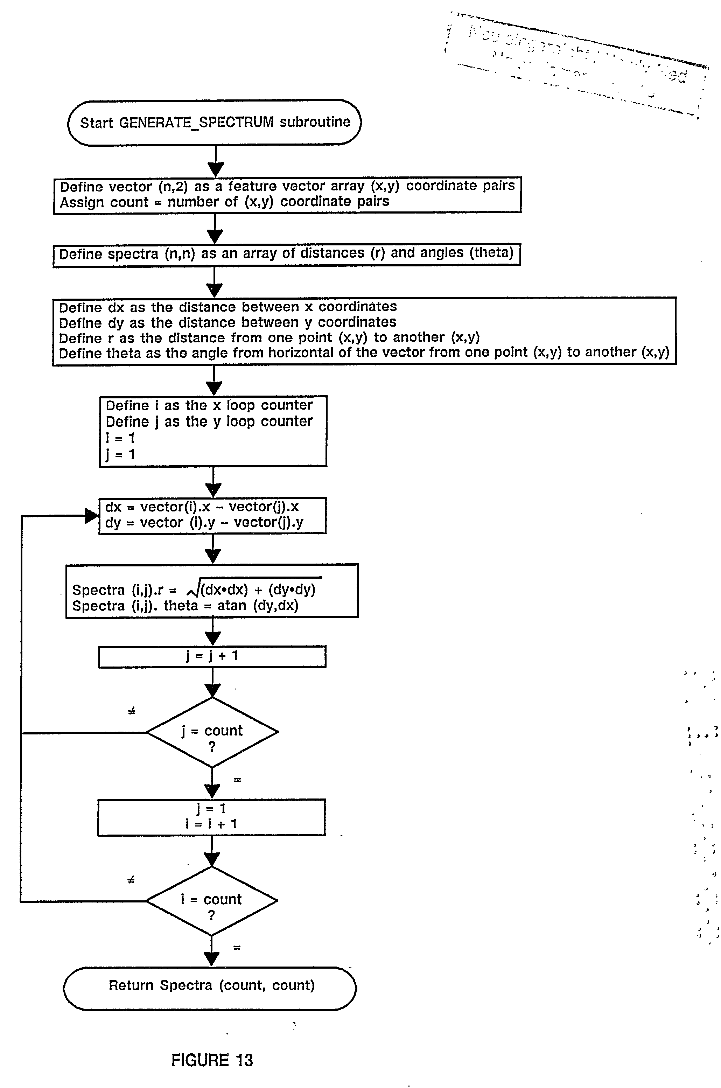

AS a first step in the IMAGE_VERIFY program shown in Fig. 12, a modified GENERATE_SPECTRUM subroutine is called upon to create a matrix of associated distances and angles of orientation for each possible pair of minutiae points in live and the results are stored in live-spectra. As mentioned previously, it is still within the scope of the invention to calculate such distances and angles for fewer than each and every possible pair of minutiae points so long as calculations are made for sufficient pairs of minutiae to provide reasonable accuracy in evaluating an overall match. The modified GENERATE_SPECTRUM subroutine will be described later in more detail in reference to Fig. 13.

After live-spectra has been generated, the appropriate master feature vector is retrieved from storage. The modified GENERATE_SPECTRUM subroutine is then called again to generate a matrix of associated distances and angles of orientation for each possible pairing of minutiae points in master, which distance and angle spectra are stored in mast-spectra. Unlike as shown in the flow chart in Fig. 5, each row of mast-spectra and live-spectra is not sorted in order of increasing magnitude, and this step is omitted from the IMAGE_VERIFY program shown in Fig. 12. Depending on the particular application of the invention, the additional processing time required to perform the sorting may offset an increase in efficiency that may be obtained by having the data sorted.

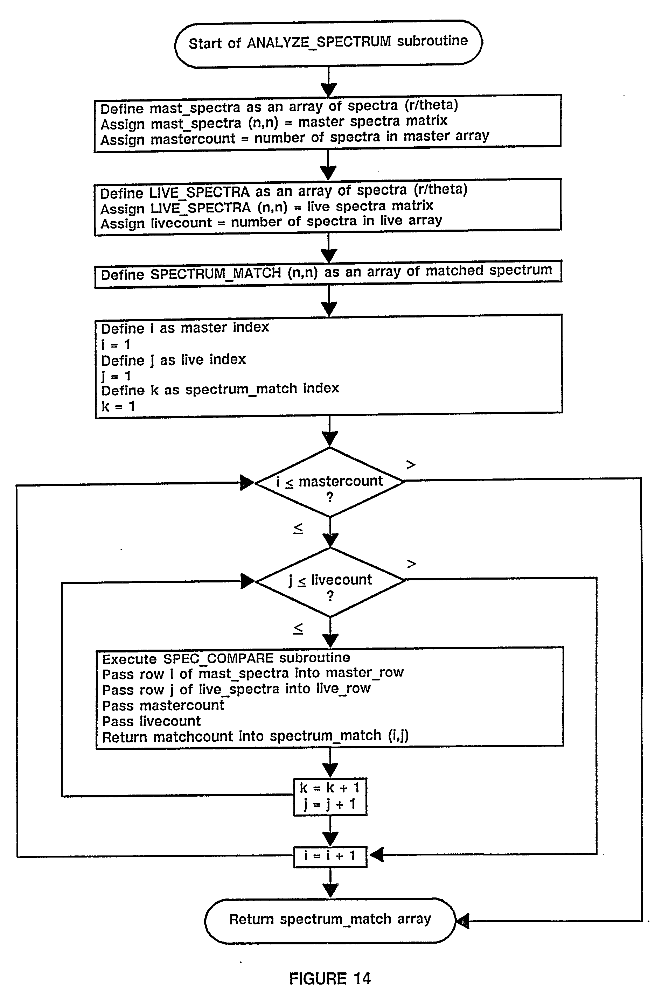

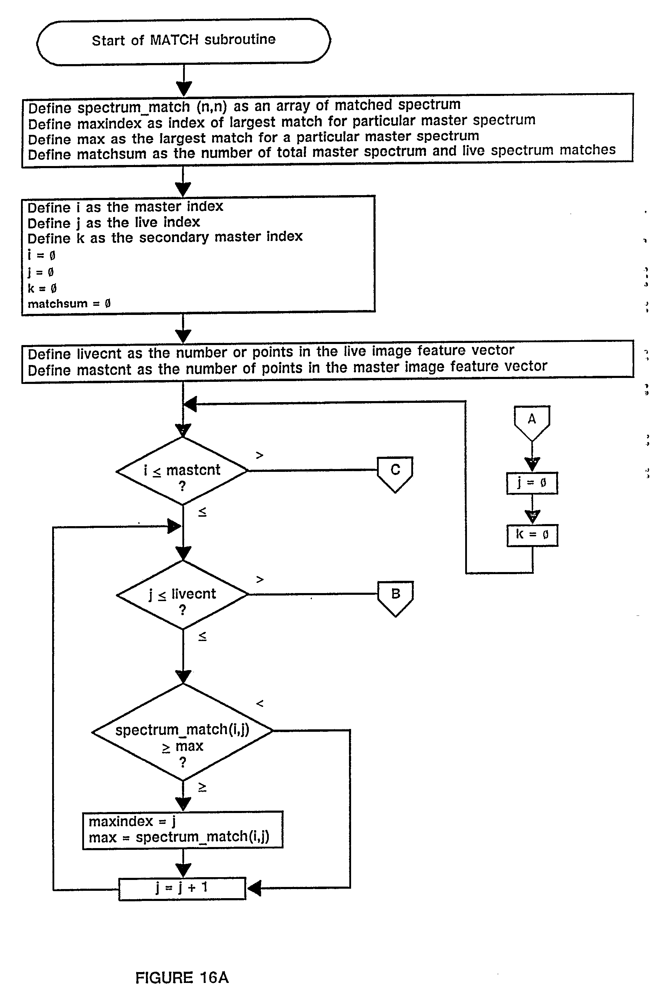

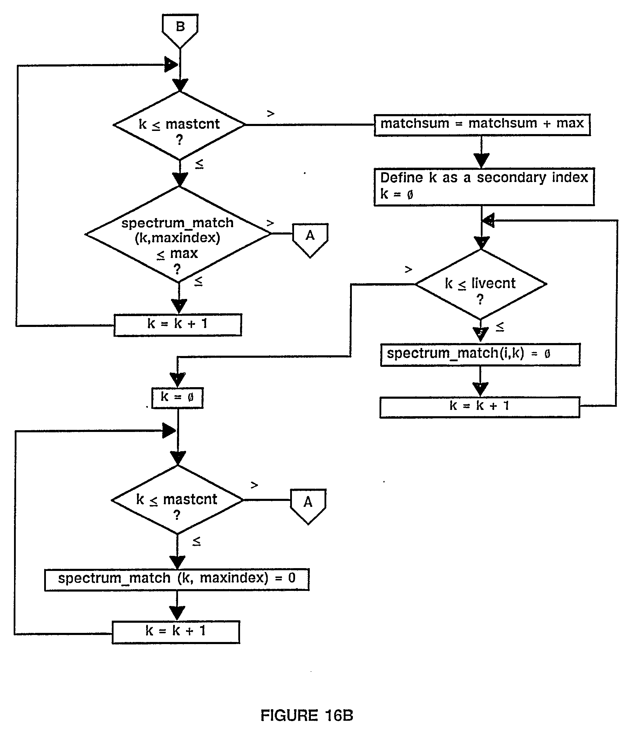

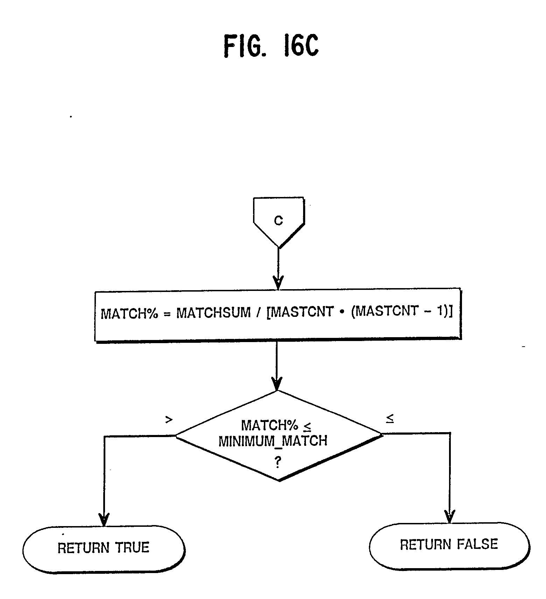

The remainder of the operation of the IMAGE_VERIFY program in Fig. 12 is essentially the same as described for the IMAGE_VERIFY program shown in Fig. 5. The distance and angle spectra representative of the live and master fingerprints are compared in the ANALYZE_SPECTRUM subroutine, modified as shown in Fig. 14, and the results of this comparison are passed to the MATCH subroutine, shown in Fig. 16. The MATCH subroutine, a modified subroutine corresponding to the IMAGE_MATCH subroutine shown in Fig. 10, evaluates the results of the comparison by ANALYZE_SPECTRUM in accordance with predetermined criteria to determine whether an overall match exists. If a match exists, is-a-match is "true" and a signal is sent by the central station 10 over the communication link 9 to the remote terminal 11 verifying the identity of the person tested. If a match is not found to exist, is-a-match is false, and a suitable signal is sent to the remote terminal 11, which signal may be used to initiate a desired responsive action such as requesting that the user try again or sounding an alarm.

The modified GENERATE_SPECTRUM subroutine shown in flowchart form in Fig. 13 operates essentially the same as the GENERATE_SPECTRUM subroutine shown in Fig. 7, except for the calculation of angles of orientation. GENERATE_SPECTRUM accepts, through the vector array, a list of X,Y coordinate pairs constituting a feature vector and generates for each of the minutiae in that feature vector the associated distance R and angle of orientation $\theta$ to each other minutia in the feature vector. As before, the distance R between two minutiae is calculated as the square root of the sum of the square of the difference between the X coordinate values of the minutiae and the square of the difference between the Y coordinate values of the minutiae. In addition to the calculation of the distance R, however, the computational loop of GENERATE_SPECTRUM includes the calculation of the angle of orientation $\theta$ with reference to the horizontal (see Fig. 11) as an arctangent:

spectra (i, j).theta = ATAN (dy, dx). Each row of the resulting spectra array that is returned to the IMAGE VERIFY program corresponds to a different minutia of the feature vector and will ultimately contain the distance and angle spectra for that index minutia.

The modified ANALYZE_SPECTRUM subroutine is shown in Fig. 14 and operates substantially the same as the ANALYZE_SPECTRUM subroutine shown in and described in connection with Fig. 8. mast-spectra and live-spectra correspond to master and live in Fig. 8 and are arrays that hold the master and live spectra of distances (R) and angles ($\theta$) that were generated by the GENERATE_SPECTRUM subroutine. ANALYZE_SPECTRUM operates to compare live distance and angle spectra to each master distance and angle spectrum and notes the correlation between each comparison of live and master spectra. The spectrum-match array returned to the IMAGE_VERIFY program contains the count of matches of the compared distance and angle values of each pairing of entries from mast-spectra and live-spectra.

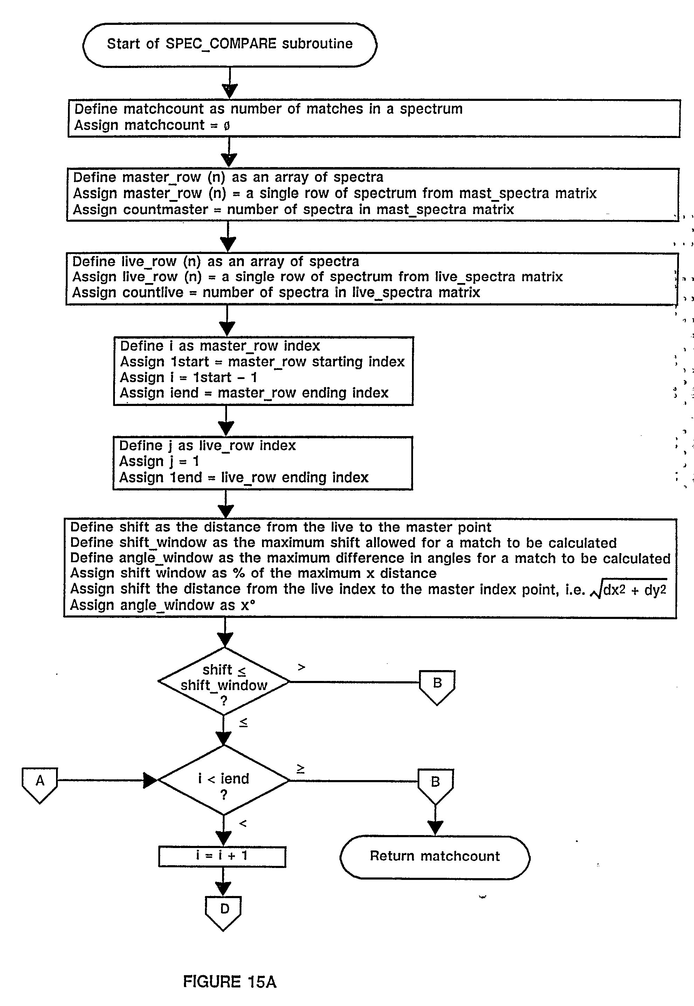

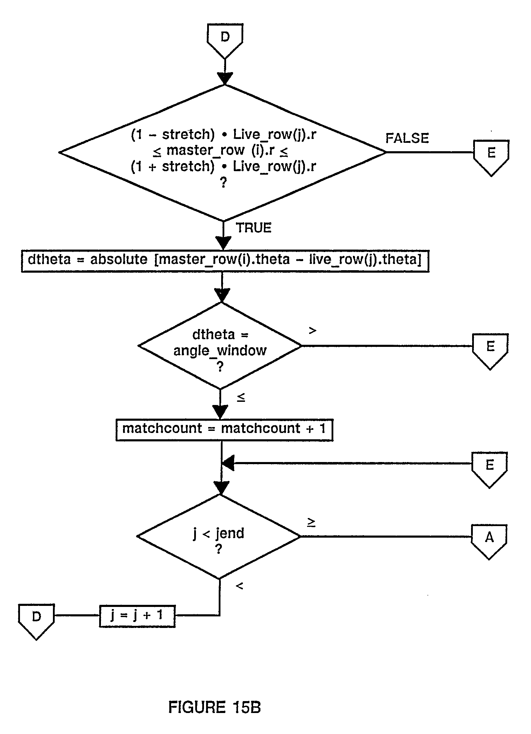

The substantive difference in the operation of ANALYZE_SPECTRUM is found within the modified SPEC_COMPARE subroutine called by ANALYZE_SPECTRUM and shown in flowchart form in Fig. 15. This modified SPEC_COMPARE subroutine still operates to perform the actual comparison of live spectra to master spectra, but also compares values of angles of orientation and includes a test to avoid unnecessary comparisons between master and live spectra that cannot reasonably be a match. The arrays and variables defined in Fig. 15A for SPEC_COMPARE are essentially the same as those defined in Fig. 9A except as described below.

A new variable shift is defined as the shift or distance between the master and live index minutiae of the spectra sought to be compared if the two spectra were superimposed in the same reference plane. Thus, for example, if the master minutia index is located at (7, 12) in the master reference plane and the live index minutia is located at (10, 16) in the live reference plane, dx would equal 3, dy would equal 4 and shift would equal 5. A new variable shift-window is also defined as the maximum shift between the master and live index minutiae for which SPEC_COMPARE will make a comparison of spectra.

In the operation of SPEC-COMPARE as shown in Fig. 15, a threshhold comparison is made to determine whether the shift between the index minutiae points of the master and live spectra sought to be compared is within the permissible amount of shift defined by shift-window. If the shift is too great, it is assumed that the master and the live spectra sought to be compared cannot represent the same minutia point in the fingerprint, and further processing by the SPEC_COMPARE subroutine is unnecessary. The amount of permissible shift defined by shift-window can be chosen as desired in accordance with the particular application of the invention and conveniently may be set to a value that is a specified precentage of the total width of the stored fingerprint image. A smaller value of shift-window will result in a relatively faster processing time but an increased chance of making a false rejection of the live fingerprint; a larger value chosen for shift-window will tend to have the opposite effect.

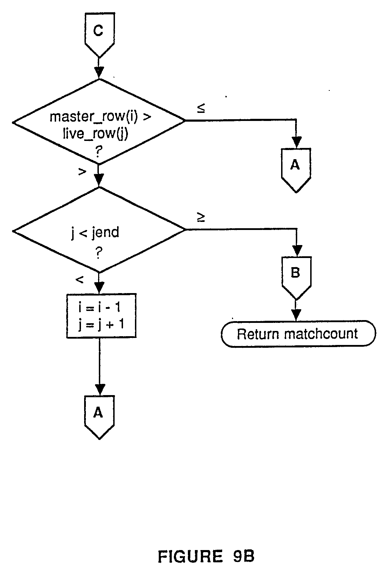

The remaining general operation of SPEC_COMPARE as shown in Fig. 15 is very similar to that shown in Fig. 9 in that i is the index to the associated distance and angle values in master-row and j is the index to the associated distance and angle values in live-row. As before, master-row and live-row contain, respectively, one master distance and angle spectrum and one live distance and angle spectrum, which are passed to SPEC_COMPARE by ANALYZE_SPECTRUM for comparison. In the computation loop beginning at the top of Fig. 15B, however, two other differences in operation are noted. First, not only are the distances (R) of the master and live spectra compared, but the angles of orientation ($\theta$) of the master and live spectra are compared as well. If both the associated distance R and angle $\theta$ values of the pair of master minutiae and the pair of live minutiae being compared correspond within predetermined tolerances, then the two pairs of points are assumed to match.

The second difference involves the tolerance used to compare the distances R. Whereas the SPEC_COMPARE subroutine shown in Fig. 9 used a specific number of pixels, i.e. spec-epsilon = 6.0 in the preferred embodiment, the tolerance in the SPEC_COMPARE subroutine shown in Fig. 15 is a percentage of the live distance being compared. Thus, at the top of Fig. 15B, if the value of the distance between the pair of master minutiae is within a predetermined percentage, defined by stretch, of the value of the distance between the pair of live minutiae, then the distances are deemed to match. A larger value of stretch will result in a relatively decreased chance of making a false rejection of the live fingerprint because some stretching and twisting of the live fingerprint is tolerated; a smaller value chosen for stretch will tend to have the opposite effect.

If the two distances match within the tolerance of stretch, the angles of orientation for the master and live pairs of minutiae are compared. Again, a tolerance is used to account for insignificant variations in the live fingerprint data owing to stretching, twisting, etc. of the live fingerprint being evaluated. If the values of the two angles of orientation are within the tolerance set by angle-window, the two angles are deemed to match.

13

If the distances and angles of orientation of the pair of master minutiae and the pair of live minutiae being compared correspond within the tolerances stretch and angle-window,matchcount is incremented by one at this point in the SPEC__COMPARE subroutine and the subroutine proceeds to the next entry in master-spectrum. This process continues until all entries in master-spectrum have been attempted to be matched with all entries in the live spectrum. When the evaluation is completed. the number of matches of associated distance and angle entries in the master spectrum to associated distance and angle entries in the live spectrum, i.e. matchcount, is returned to the ANALYZE__SPECTRUM subroutine in Fig. 14 and stored in spectrum-match,

As in the invention of the aforementioned prior application , SPEC__COMPARE will be called once by ANALYZE__SPECTRUM for each pair combination of a master distance and angle spectrum and a live distance and angle spectrum. spectrum-match will therefore ultimately contain (mastercount x livecount) entries, where each entry contains the number of matches found by SPEC__COMPARE of the distance and angle values for a unique pairing of a master distance and angle spectrum and a live distance and angle spectrum.

The final evaluation of the correlation data generated by the ANALYZE__SPECTRUM subroutine is performed by the MATCH subroutine shown in Fig. 16, which is called by the IMAGE__VERIFY program after the ANALYZE__SPECTRUM subroutine has been executed (see Fig. 12). In general, the MATCH subroutine corresponds with the IMAGE__MATCH subroutine shown in Fig. 10. spectrum-match is an array passed to the MATCH subroutine and contains the count of matches of the compared distance and angle spectra. max for a particular master distance and angle spectrum will be the maximum number of matches of associated distance and angle entries between that master spectrum and all live spectra that had been compared with that master spectrum. maxindex for a particular master distance and angle spectrum will be the index identifying the particular live distance and angle spectrum associated with max. livecnt and mastcnt are the number of minutiae in the live feature vector and the master feature vector respectively.

In the processing loop of MATCH that is shown at the bottom of Fig. 16A, spectrum-match is searched to find max and maxindex for each master distance and angle spectrum or, in other words, the live distance and angle spectrum which best matches each master spectrum. When max and maxindex are found for a particular master spectrum, processing continues at flag B on Fig. 16B. At this point, the subroutine loops through the spectrum-match column associated with maxindex to check for any values greater than max, i.e. to check whether any other master spectrum has an even better match with the live spectrum identified by maxindex. If a better match exists, no further evaluation of the subject master spectrum is done and the subroutine returns to flag A to process the data for the next master spectrum in spectrum-match.

If no better match exists, max is added to matchsum which carries the running total of the number of matched distance and angle entries for a matched pair of a master and a live spectrum. The remaining two processing loops in the flowchart shown in Fig. 16B serve to zero out the values in the row of spectrum-match representing the subject master spectrum as well as the values in the maxindex column of spectrum-match representing the live spectrum matched with the subject master spectrum. This is done so that the values that had been stored in this row and column of spectrum-match are not considered in the processing of the remaining master spectra.

After the best live spectrum matches for all of the master distance and angle spectra have been found, the final evaluation in the MATCH subroutine is performed as shown in Fig. 16C. Here, match% is calculated as the ratio of the total actual number of matched distance and angle entries for all of the matched master and live spectra to the total possible number of matched distance and angle entries in a perfect match. For example, if a master feature vector contained fifteen minutiae, i.e. mastcnt = 15, and a perfect match occurred with a live feature vector containing fifteen minutiae, then the number of distance and angle entries matching for the master and live spectra, i.e., matchsum, would be 15 x 14 = 210. Anything less than a completely perfect match between the master feature vector and the live feature vector would result in a smaller matchsum and, therefor, a match% less than 100%.

The calculated match% is compared with minimum-match, which is the minimum value at which an overall match between the live and the master fingerprint is deemed to exist. We have used a minimum-match of 34%, although a more or less stringent matching requirement can of course be selected in accordance with the desired level of security for the particular application. If match% exceeds minimum-match, "true" is returned to the IMAGE__VERIFY program, signifying that an overall match exists; otherwise, "false" is returned, signifying that an overall match does not exist.

While there has been illustrated and described what is at present considered to be a preferred embodiment of the present invention, it will be understood by those skilled in the art that various changes and modifications may be made, and equivalents may be substituted for elements thereof without departing from the true scope of the invention. In addition, many modifications may be made to adapt the teachings of the invention to a particular situation without departing from the central scope of the invention. For example, the concept of using angles of orientation as the basis for evaluating a match can be implemented alone, as well as in addition to the concept of using distances as described in the aforementioned prior application. Further, particular aspects of the implementation of the invention described in the prior application can be used in the present invention, e.g., the overall match evaluation procedure, and vice-versa. Therefore, it is intended that this invention not be limited to the particular embodiment disclosed as the best mode contemplated for carrying out this invention, but that the invention will include all embodiments falling within the scope of the appended claims.

## Claims

1. A method of matching a live image with a master image comprising the steps of:
generating a set of points representative of characteristic features of the live image;
generating a set of points representative of characteristic features of the master image;
deriving the distances between a plurality of pairs of the live characteristic points;
deriving the distances between a plurality of pairs of the master characteristic points; and
comparing the live distances with the master distances to determine whether or not the live image matches the master image.

2. A method according to claim 1 further comprising the initial steps of:
providing a set of master images; and
receiving an identification of one of the set of master images for matching with the live image.

3. A method according to claim 1 wherein the steps of deriving the distances between pairs of the live characteristic points and deriving the distances between pairs of the master characteristic points comprise for each such step the step of forming, for each point in the set of points, a spectrum of values representing the distances between the point and each other point in the set of points.

4. A method according to claim 3 wherein the step of comparing comprises comparing each of the master distance spectra to live distance spectra by determining, for each such comparison of a master distance spectrum to a live distance spectrum, the distance values in the master distance spectrum that match separate distance values in the live distance spectrum within a predetermined tolerance.

5. A method according to claim 4 wherein the step of comparing further comprises indicating a match between the live image and the master image if at least a predetermined proportion of master distance spectra are matched with separate live distance spectra, where a master distance spectrum is deemed to match a live distance spectrum if the proportion of the distance values in the master distance spectrum that match distance values in the live distance spectrum exceeds a predetermined value.

6. A method of identifying a person's identity comprising the steps of:
receiving an identification of live minutiae appearing in at least a portion of a selected fingerprint of the person, where the minutiae are identified by their spatial coordinates relative to a reference coordinate system;
deriving the distances between a plurality of pairs of the live minutiae;
providing values for the distances between a plurality of pairs of minutiae appearing in at least a portion of a master fingerprint; and
comparing the live distances with the master distances to determine whether or not the live fingerprint matches the master fingerprint.

7. A method according to claim 6 further comprising the steps of:
providing a collection of sets of master minutiae appearing in at least a portion of their associated master fingerprints; and
receiving an identification of one of the sets of master minutiae and deriving the distances between a plurality of pairs of minutiae in that set of master minutiae.

8. A method according to claim 7 wherein the steps of deriving the distances between pairs of live minutiae and providing the distances between pairs of master minutiae comprise for each such step the step of forming, for each minutia, a spectrum of values representing the distances between the minutia and each other minutia.

9. A method according to claim 8 wherein the step of comparing further comprises indicating a match for the live fingerprint if at least a predetermined proportion of master distance spectra are matched with live distance spectra, where a master distance spectrum is deemed to match a live distance spectrum if a predetermined proportion of the distance values in the master distance spectrum match distance values in the live distance spectrum within a predetermined tolerance.

10. A method according to claim 6 further comprising the step of generating an indication of a match if the live fingerprint is successfully matched with the master fingerprint, or alternatively generating an indication of the absence of a match if the live fingerprint is unsuccessfully matched with the master fingerprint.

11. An apparatus for matching a live image with a master image comprising:

a first means for receiving and storing a set of points representative of characteristic features of the live image;

a second means for receiving and storing a set of points representative of characteristic features of the master image;

computing means for receiving the live and the master characteristic points from the first and second means, deriving the distances between a plurality of pairs of the live characteristic points and deriving the distances between a plurality of pairs of the master characteristic points; and

means for comparing the live distances with the master distances and initiating a predetermined activity upon a match between the live distances and the master distances within a predetermined tolerance.

12. An apparatus according to claim 11 wherein the first means further comprises means for sensing the live image and forming a two-tone digital representation thereof; means for storing the digital representation; and means for processing the digital representation to generate a set of points representative of characteristic features of the live image.

13. An apparatus according to claim 11 further comprising a third means associated with the first means for receiving an indication of the purported identity of the live image; and

storage means for storing a plurality of sets of points representative of characteristic features of a plurality of corresponding master images;

wherein the computing means is adapted to receive from the third means a signal identifying the purported identity of the live image and obtain from the storage means a set of points for the master image associated with the purported identity.

14. A method of matching a live image with a master image comprising the steps of:

generating a set of points representative of characteristic features of the live image;

generating a set of points representative of characteristic features of the master image;

deriving the distances and angles of orientation between a plurality of pairs of the live characteristic points;

deriving the distances and angles of orientation between a plurality of pairs of the master characteristic points; and

comparing the live distances and angles of orientation with the master distances and angles of orientation to determine whether or not the live image matches the master image.

15. A method according to claim 14 further comprising the initial steps of:

providing a set of master images; and

receiving an identification of one of the set of master images for matching with the live image.

16. A method according to claim 14 wherein the steps of deriving the distances and angles of orientation between pairs of the live characteristic points and deriving the distances and angles of orientation between pairs of the master characteristic points comprise for each such step the step of forming, for each point in the set of points, a spectrum of values representing the distances and angles of orientation between that index point and each other point in the set of points.

17. A method according to claim 16 wherein the step of comparing comprises comparing each of the master distance and angle spectra to live distance and angle spectra by determining, for each such comparison of a master spectrum to a live spectrum, the distance and angle values in the master spectrum that match distance and angle values in the live spectrum within predetermined tolerances.

18. A method according to claim 17 wherein a comparison between a master distance and angle spectrum and a live distance and angle spectrum is not made if the shift between the index point of the master spectrum and the index point of the live spectrum is greater than a predetermined value.

19. A method according to claim 17 wherein the step of comparing further comprises indicating a match between the live image and the master image if at least a predetermined proportion of master distance and angle spectra are matched with separate live distance and angle spectra, where a master distance and angle spectrum is deemed to match a live distance and angle spectrum if the proportion of the associated distance and angle values in the master spectrum that match associated distance and angle values in the live spectrum exceeds a predetermined value.

20. A method of identifying a person's identity comprising the steps of:

receiving an identification of live minutiae appearing in at least a portion of a selected fingerprint of the person, where the minutiae are identified by their spatial coordinates relative to a reference coordinate system;

deriving the distances and angles of orientation between a plurality of pairs of the live minutiae;

providing values for the distances and angles of orientation between a plurality of pairs of minutiae appearing in at least a portion of a master fingerprint; and

comparing the live distances and angles of orientation with the master distances and angles of orientation to determine whether or not the live fingerprint matches the master fingerprint.

21. A method according to claim 20 further comprising the steps of:

providing a collection of sets of master minutiae appearing in at least a portion of their respective master fingerprints; and

receiving an identification of one of the sets of master minutiae and deriving the distances and angles of orientation between a plurality of pairs of minutiae in that set of master minutiae.

22. A method according to claim 21 wherein the steps of deriving the distances and angles of orientation between pairs of live minutiae and providing the distances and angles of orientation between pairs of master minutiae comprise for each such step the step of forming, for each minutia, a spectrum of values representing the distances and angles of orientation between that index minutia and each other minutia.

23. A method according to claim 22 wherein the step of comparing comprises comparing each of the master distance and angle spectra to live distance and angle spectra by determining, for each such comparison of a master spectrum to a live spectrum, the distance and angle values in the master spectrum that match distance and angle values in the live spectrum within predetermined tolerances.

24. A method according to claim 23 wherein a comparison between a master distance and angle spectrum and a live distance and angle spectrum is not made if the shift between the index point of the master spectrum and the index point of the live spectrum is greater than a predetermined value.

25. A method according to claim 23 wherein the step of comparing further comprises determining which live spectrum, if any, matches each master spectrum the best by having the greatest number of matches between associated distance and angle values in the live spectrum and associated distance and angle values in the master spectrum.

26. A method according to claim 25 wherein the step of comparing further comprises indicating a match between the live image and the master image if the total number of matches of distance and angle values between the master spectra and their best matching live spectra exceeds a predetermined percentage of the number of such matches in a perfect match between the live image and the master image.

27. A method according to claim 20 further comprising the step of generating an indication of a match if the live fingerprint is successfully matched with the master fingerprint, or alternatively generating an indication of the absence of a match if the live fingerprint is unsuccessfully matched with the master fingerprint.

28. A method of matching a live image with a master image comprising the steps of:

generating a set of points representative of characteristic features of the live image;

generating a set of points representative of characteristic features of the master image;

deriving the angles of orientation between a plurality of pairs of the live characteristic points;

deriving the angles of orientation between a plurality of pairs of the master characteristic points; and

comparing the live angles of orientation with the master angles of orientation to determine whether or not the live image matches the master image.

29. A method according to claim 28 wherein the live image is a live fingerprint of a person, the master image is a representation of a master fingerprint, and the person's identity is verified if the results of the step of comparing satisfy predetermined criteria.

30. An apparatus for matching a live image with a master image comprising:

a first means for receiving and storing a set of points representative of characteristic features of the live image;

a second means for receiving and storing a set of points representative of characteristic features of the master image;

computing means for receiving the live and the master characteristic points from the first and second means, deriving the distances and angles of orientation between a plurality of pairs of the live characteristic points and deriving the distances and angles of orientation between a plurality of pairs of the master characteristic points; and

means for comparing the live distances and angles of orientation with the master distances and angles of orientation and initiating a predetermined activity upon a match between the live distances and angles of orientation and the master distances and angles of orientation within a predetermined tolerance.

31. An apparatus according to claim 30 wherein the first means further comprises means for sensing the live image and forming a two-tone digital representation thereof; means for storing the digital representation; and means for processing the digital representation to generate a set of points representative of characteristic features of the live image.

32. An apparatus according to claim 30 further comprising a third means associated with the first means for receiving an indication of the purported identity of the live image; and

storage means for storing a plurality of sets of points representative of characteristic features of a plurality of corresponding master images;

wherein the computing means is adapted to receive from the third means a signal identifying the purported identity of the live image and obtain from the storage means a set of points for the master image associated with the purported identity.

**FIGURE 1**

FIGURE 2

**FIGURE 3**

```
        ( Start of IMAGE_PROCESS program )
                        |
                        v
   +-------------------------------------------------+
   | Define live_feature_vector(n,2) array as live   |
   | image feature vector array                      |
   +-------------------------------------------------+
                        |
                        v
   +-------------------------------------------------+
   | Obtain image using any scanning/digitizing method|
   +-------------------------------------------------+
                        |
                        v
   +-------------------------------------------------+
   | Transfer image into image storage area          |
   +-------------------------------------------------+
                        |
                        v
              +-------------------+
              |   Thin image      |
              +-------------------+
                        |
                        v
   +-------------------------------------------------+
   | Execute CREATE_VECTOR subroutine                |
   | Return feature_vector results into              |
   | live_feature_vector                             |
   +-------------------------------------------------+
                        |
                        v
   +-------------------------------------------------+
   | Transmit live_feature_vector array to system    |
   | with IMAGE_VERIFY software                       |
   +-------------------------------------------------+
                        |
                        v
                  (   End   )
```

## FIGURE 4

```
┌─────────────────────────────────────┐
│   Start of IMAGE_VERIFY program      │
└─────────────────────────────────────┘
                  │
                  ▼
```

Define spec_master(n,n) array as master image distance matrix
Define spec_live(n,n) array as live image distance matrix
Define master_feature_vector(n,2) array as master feature vector
Define live_feature_vector(n,2) array as live feature vector
Define match(n) array as spectrum match array
Define address(n) array as cross reference address to match
Define is_a_match as a boolean variable indicating a match

Execute GENERATE_SPECTRUM subroutine
Pass live_feature_vector array into vector array
Return spectra array results into spec_live array

Sort each row of the spec_live array from low to high

Retrieve master image feature vector from storage
master_feature_vector = master image feature vector

Execute GENERATE_SPECTRUM subroutine
Pass master_feature_vector array into vector array
Return spectra array results into spec_master array

Sort each row of spec_master array from low to high

Execute ANALYZE_SPECTRUM subroutine
Pass spec_master array into master array
Pass spec_live array into live array
Return spectrum_match array results into match array
Return link_addr array results into address array

A

FIGURE 5A

A

Execute IMAGE_MATCH subroutine
Pass match array into spectrum_match array
Pass address array into link_addr array
Return boolean value into is_a_match

is_a_match
?

FALSE

TRUE

Live image is a match to the master image

Live image is not a match to the master image

End

FIGURE 5B

( Start of CREATE_VECTOR subroutine )

Define feature_vector(n,2) as an array of (x,y) coordinate points

Assign XDIM = maximum x image dimension
Assign YDIM = maximum y image dimension
Define NNP as number of neighboring pixels

Assign x = 0
Assign y = 0

B

Access pixel(x,y) from image storage
NNP = 0

pixel(x,y) ? — OFF → D

ON

pixel(x-1,y-1) ? — ON → NNP = NNP + 1

OFF

pixel(x,y-1) ? — ON → NNP = NNP + 1

OFF

pixel(x+1,y-1) ? — ON → NNP = NNP + 1

OFF

pixel(x-1,y) ? — ON → NNP = NNP + 1

OFF

A

**FIGURE 6A**

A

pixel(x+1,y) ? — ON → NNP = NNP + 1

OFF

pixel(x-1,y+1) ? — ON → NNP = NNP + 1

OFF

pixel(x,y+1) ? — ON → NNP = NNP + 1

OFF

pixel(x+1,y+1) ? — ON → NNP = NNP + 1

OFF

NNP = 3 ? — = → Add pixel(x,y) to feature_vector array

≠

D

y = y + 1

y = YDIM ? — = → C

≠

B

FIGURE 6B

```
        ┌─────┐
        │  C  │
        └──┬──┘
           │
           ▼
      ┌─────────┐
      │  y = 0  │
      └────┬────┘
           │
           ▼
      ┌───────────┐
      │ x = x + 1 │
      └─────┬─────┘
            │
            ▼
         ╱─────────╲
        ╱  x = XDIM ╲        =
        ╲     ?     ╱─────────────┐
         ╲─────────╱              │
            │ ≠                   ▼
            ▼              ╭──────────────────╮
          ┌───┐           │   Return with     │
          │ B │           │ feature_vector array │
          └───┘           ╰──────────────────╯
```

FIGURE  6C

```
( Start of GENERATE_SPECTRUM subroutine )
                         |
                         v
+-----------------------------------------------------------+
| Define vector(n,2) as a feature vector array of (x,y)     |
| coordinate pairs                                          |
| Assign maxcount = number of feature vector (x,y)          |
| coordinate pairs                                          |
+-----------------------------------------------------------+
                         |
                         v
+-----------------------------------------------------------+
| Define coordx(n) as an array of x coordinates             |
| Define coordy(n) as an array of y coordinates             |
| Assign coordx(n) = vector array x coordinates             |
| Assign coordy(n) = vector array y coordinates             |
+-----------------------------------------------------------+
                         |
                         v
+-----------------------------------------------------------+
| Define array spectra(maxcount, maxcount) as               |
| spectrum distance matrix                                  |
+-----------------------------------------------------------+
                         |
                         v
+-----------------------------------------------------------+
| Define dx as distance between x coordinates               |
| Define dy as distance between y coordinates               |
+-----------------------------------------------------------+
                         |
                         v
+-----------------------------------------------------------+
| Define i as x loop counter                                |
| Define j as y loop counter                                |
| i = 1                                                     |
| j = 1                                                     |
+-----------------------------------------------------------+
                         |
                         v
+-----------------------------------------------------------+
| dx = coordx(i) - coordx(j)                                |
| dy = coordy(i) - coordy(j)                                |
+-----------------------------------------------------------+
                         |
                         v
```

$$\text{spectra}(i,j) = \sqrt{(dx \cdot dx) + (dy \cdot dy)}$$

```
                         |
                         v
                  +-------------+
                  |  j = j + 1  |
                  +-------------+
                         |
                         v
            <>  j = maxcount ?  -- ≠ -->
                         |
                         = 
                         v
                  +-------------+
                  |  j = 1      |
                  |  i = i + 1  |
                  +-------------+
                         |
                         v
            <>  i = maxcount ?  -- ≠ -->
                         |
                         =
                         v
       ( Return spectra(maxcount,maxcount) )
```

**FIGURE 7**

Start of ANALYZE_SPECTRUM subroutine

Define master(n,n) as an array
Assign master(n,n) = spec_master
Assign mastercount = number of spectra in master array

Define live(n,n) as an array
Assign live(n,n) = spec_live
Assign livecount = number of spectra in live array

Define spectrum_match(n) as an array of matched spectrum
Define link_addr(n) as an array of addresses for spectrum_match

Define i as master index
i = 1
Define j as live index
Define k as spectrum_match and link_addr index
k = 1

i ≤ mastercount
?

j = 1

j ≤ livecount
?

Execute SPEC_COMPARE subroutine
Pass row i of master into master_row
Pass row j of live into live_row
Return matchcount into spectrum_match(k)

link_addr(k) = j
k = k + 1
j = j + 1

i = i + 1

Return spectrum_match and link_addr arrays

FIGURE 8

( Start of SPEC_COMPARE subroutine )

Define spec_epsilon as the spectrum epsilon tollerance
Assign spec_epsilon = 6.0

Define matchcount as number of matches in a spectrum
Assign matchcount = 0

Define master_row(n) as an array
Assign master_row(n) = a single row of the master distance spectra matrix

Define live_row(n) as an array
Assign live_row(n) = a single row of the live distance spectra matrix

Define i as master_row index
Assign i = 0
Assign iend = master_row ending index

Define j as live_row index
Assign j = 1
Assign jend = live_row ending index

**FIGURE 9A**

A

i < iend
?

≥ → B

<

i = i + 1

dspec = absolute (master_row(i) - live_row(j))

dspec ≤ spec_epsilon
?

≤ → matchcount = matchcount + 1

> → C

j < jend
?

≥ → B

<

j = j + 1

FIGURE 9B

( Start of IMAGE_MATCH subroutine )

Define spectrum_match(n) as an array of matched spectrum
Define link_addr(n) as an array of addresses for spectrum_match

Assign mastercount = number of master spectrum matrix row elements
Assign livecount = number of live spectrum matrix row elements
Define spec_match_threshold as allowable spectrum match threshold
Assign spec_match_threshold = 0.67
Define accept_spectrum as allowable acceptance of a spectrum matrix
Assign accept_spectrum = spec_match_threshold • mastercount
Define minimum_match% as allowable minimum match percentage
Assign minimum_match% = 0.63

Define sigma_matches as total number of matches into the master
          spectrum matrix
Assign sigma_matches = 0

Define select(n) as array of selected match elements between the
          master and live spectrum matrices
Clear select array to all zero values

Define total_elements as total number of elements in the master
          spectrum array
total_elements = mastercount • livecount

i = 1

FIGURE 10A

i < total_elements
?

≥

A

<

m = link_addr(i)
j = spectrum_match(i)

j > select(m)
?

≤

>

select(m) = j

i = i + 1

A

i = 0

i < livecount
?

≥

<

j = select(i)

j ≥ accept_spectrum
?

<

≥

sigma_matches = sigma_matches + j

i = i + 1

match% = sigma_matches/total_elements

match% >
minimum_match%
?

>

≤

Return TRUE
(Live image is a match)

Return FALSE
(Live image is not a match)

FIGURE  10B

FIGURE 11

( Start of IMAGE_VERIFY Program )

Define mast_spectra (n,n,2) as master r/theta matrix
Define live_spectra (n,n,2) as live r/theta matrix
Define master (n,2) array as master feature vector
Define live (n,2) array as live feature vector
Define match (n,n) array as spectrum match array
Define is_a_match as a boolean variable indicating a match

Execute GENERATE_SPECTRUM subroutine
Pass live array into vector array
Return spectra array results into live_spectra

Retrieve master image feature vector from storage
Master = master image feature vector

Execute GENERATE_SPECTRUM subroutine
Pass master array into vector array
Return spectra array results into MAST_SPECTRA

Execute ANALYZE_SPECTRUM subroutine
Pass MAST_SPECTRA array into MAST_SPECTRA array
Pass LIVE_SPECTRA array into LIVE_SPECTRA array
Return SPECTRUM_MATCH array results into match array

Execute MATCH subroutine
Pass MATCH array into SPECTRUM_MATCH array
Return boolean value into IS_A_MATCH

< IS_A_MATCH ? >   FALSE

TRUE

Live image is a match to the master image

Live image is not a match to the master image

( End )

FIGURE 12

Start GENERATE_SPECTRUM subroutine

Define vector (n,2) as a feature vector array (x,y) coordinate pairs
Assign count = number of (x,y) coordinate pairs

Define spectra (n,n) as an array of distances (r) and angles (theta)

Define dx as the distance between x coordinates
Define dy as the distance between y coordinates
Define r as the distance from one point (x,y) to another (x,y)
Define theta as the angle from horizontal of the vector from one point (x,y) to another (x,y)

Define i as the x loop counter
Define j as the y loop counter
i = 1
j = 1

dx = vector(i).x – vector(j).x
dy = vector (i).y – vector(j).y

Spectra (i,j).r = $\sqrt{(dx \cdot dx) + (dy \cdot dy)}$
Spectra (i,j). theta = atan (dy,dx)

j = j + 1

j = count
?
≠

=

j = 1
i = i + 1

i = count
?
≠

=

Return Spectra (count, count)

FIGURE 13

EP 0 300 167 A2

```
                    ╭─────────────────────────────────────╮
                    │  Start of ANALYZE_SPECTRUM subroutine │
                    ╰─────────────────────────────────────╯
                                      │
                                      ▼
        ┌────────────────────────────────────────────────────────────┐
        │ Define mast_spectra as an array of spectra (r/theta)          │
        │ Assign mast_spectra (n,n) = master spectra matrix             │
        │ Assign mastercount = number of spectra in master array        │
        └────────────────────────────────────────────────────────────┘
                                      │
                                      ▼
        ┌────────────────────────────────────────────────────────────┐
        │ Define LIVE_SPECTRA as an array of spectra (r/theta)          │
        │ Assign LIVE_SPECTRA (n,n) = live spectra matrix               │
        │ Assign livecount = number of spectra in live array            │
        └────────────────────────────────────────────────────────────┘
                                      │
                                      ▼
        ┌────────────────────────────────────────────────────────────┐
        │ Define SPECTRUM_MATCH (n,n) as an array of matched spectrum   │
        └────────────────────────────────────────────────────────────┘
                                      │
                                      ▼
        ┌────────────────────────────────────────────────────────────┐
        │ Define i as master index                                      │
        │ i = 1                                                          │
        │ Define j as live index                                        │
        │ j = 1                                                          │
        │ Define k as spectrum_match index                              │
        │ k = 1                                                          │
        └────────────────────────────────────────────────────────────┘
                                      │
                                      ▼
                              ◇ i ≤ mastercount ?  ◇ ──── > ────┐
                                      │                          │
                                      │ ≤                        │
                                      ▼                          │
                              ◇ j ≤ livecount ?  ◇ ──── > ────┐  │
                                      │                       │  │
                                      │ ≤                     │  │
                                      ▼                       │  │
        ┌────────────────────────────────────────────────┐   │  │
        │ Execute SPEC_COMPARE subroutine                  │   │  │
        │ Pass row i of mast_spectra into master_row       │   │  │
        │ Pass row j of live_spectra into live_row         │   │  │
        │ Pass mastercount                                 │   │  │
        │ Pass livecount                                   │   │  │
        │ Return matchcount into spectrum_match (i,j)      │   │  │
        └────────────────────────────────────────────────┘   │  │
                                      │                       │  │
                                      ▼                       │  │
                              ┌──────────────┐                │  │
                              │ k = k + 1    │                │  │
                              │ j = j + 1    │                │  │
                              └──────────────┘                │  │
                                      │                       │  │
                                      ▼                       │  │
                              ┌──────────────┐◄───────────────┘  │
                              │ i = i + 1    │                    │
                              └──────────────┘                    │
                                      │                           │
                                      ▼                           │
                    ╭─────────────────────────────────╮◄──────────┘
                    │  Return spectrum_match array      │
                    ╰─────────────────────────────────╯
```

FIGURE 14

FIGURE 15A

D

(1 − stretch) • Live_row(j).r ≤ master_row (i).r ≤ (1 + stretch) • Live_row(j).r ? —FALSE→ E

TRUE

dtheta = absolute [master_row(i).theta − live_row(j).theta]

dtheta = angle_window ? —>→ E

≤

matchcount = matchcount + 1

←E

j < jend ? —≥→ A

<

D ← j = j + 1

FIGURE 15B

Start of MATCH subroutine

Define spectrum_match (n,n) as an array of matched spectrum
Define maxindex as index of largest match for particular master spectrum
Define max as the largest match for a particular master spectrum
Define matchsum as the number of total master spectrum and live spectrum matches

Define i as the master index
Define j as the live index
Define k as the secondary master index
i = 0
j = 0
k = 0
matchsum = 0

Define livecnt as the number or points in the live image feature vector
Define mastcnt as the number of points in the master image feature vector

A

i ≤ mastcnt ? — > — C

j = 0

k = 0

≤

j ≤ livecnt ? — > — B

≤

spectrum_match(i,j) ≥ max ? — < —

≥

maxindex = j
max = spectrum_match(i,j)

j = j + 1

FIGURE 16A

```
                              ┌─────┐
                              │  B  │
                              └──┬──┘
                                 ▼
              ┌──────────────────◇─────────────────┐
              │                                     │
         ┌────▼────────┐        >       ┌───────────────────────────────────┐
         │  k ≤ mastcnt│───────────────▶│ matchsum = matchsum + max         │
         │      ?      │                └─────────────────┬─────────────────┘
         └────┬────────┘                                  ▼
              │ ≤                       ┌───────────────────────────────────┐
              ▼                         │ Define k as a secondary index     │
     ┌──────────────────┐   >           │ k = ø                             │
     │ spectrum_match    │──────▶┌───┐   └─────────────────┬─────────────────┘
     │ (k,maxindex)      │       │ A │                     ▼
     │ ≤ max             │       └───┘           ┌──────────◇──────────┐
     │     ?             │                   >   │   k ≤ livecnt       │
     └────┬──────────────┘       ◀────────────── │        ?            │
          │ ≤                                    └──────────┬──────────┘
          ▼                                                 │ ≤
  ┌───────────────┐                          ┌──────────────▼──────────────┐
  │   k = k + 1   │                          │   spectrum_match(i,k) = ø    │
  └───────────────┘                          └──────────────┬──────────────┘
                                                            ▼
              ┌───────────────┐             ┌──────────────────────────────┐
              │    k = ø      │             │        k = k + 1             │
              └───────┬───────┘             └──────────────────────────────┘
                      ▼
          ┌───────────◇───────────┐
          │    k ≤ mastcnt        │   >     ┌───┐
          │         ?             │────────▶│ A │
          └───────────┬───────────┘         └───┘
                      │ ≤
                      ▼
  ┌───────────────────────────────────────┐
  │  spectrum_match (k, maxindex) = 0      │
  └───────────────────┬───────────────────┘
                      ▼
              ┌───────────────┐
              │   k = k + 1   │
              └───────────────┘
```

FIGURE 16B

EP 0 300 167 A2

# FIG. 16C

C

MATCH% = MATCHSUM / [MASTCNT • (MASTCNT – 1)]

MATCH% ≤
MINIMUM_MATCH
?

> ≤

RETURN TRUE

RETURN FALSE